# EUROPEAN PATENT APPLICATION

(11) **EP 4 518 364 A1**
(43) Date of publication of application: **05.03.2025**
(21) Application number: 23811008.4
(22) Date of filing: 22.05.2023
(51) Int. Cl.: H04W 4/06

(54) **COMMUNICATION METHOD, DEVICE AND SYSTEM**

(30) Priority: 26.05.2022 CN 202210581289
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN)
(74) Representative: Isarpatent
(86) International application number: PCT/CN2023/095565
(87) International publication number: WO 2023/226937

(57) **Abstract**

A communication method, apparatus, and system are provided. The method may include: A terminal apparatus determines first indication information, where the first indication information indicates a status of a multicast/broadcast service, and the status of the multicast/broadcast service includes an inactive state; and the terminal apparatus stops, based on the first indication information, using a first radio network temporary identifier to monitor a physical downlink control channel corresponding to a multicast broadcast traffic channel. In the method, a network apparatus indicates the status of the multicast/broadcast service to the terminal apparatus. When determining that the status of the multicast/broadcast service is inactive, the terminal apparatus may not monitor the physical downlink control channel corresponding to the multicast broadcast traffic channel. This reduces power consumption of the terminal apparatus.

## Description

This application claims priority to Chinese Patent Application No. 202210581289.5, filed with the China National Intellectual Property Administration on May 26, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

From the perspective of the end-to-end management and control procedure and transmission mode, multicast/broadcast services (multicast/broadcast services, MBSs) designed in new radio (new radio, NR) are classified into two types: broadcast (broadcast) services and multicast (multicast) services. The multicast services are designed for services with high quality of service (quality of service, QoS) requirements, and group member management is required for the multicast services. The multicast services can provide a same QoS level as unicast services, but the multicast services can be provided only for a user equipment (user equipment, UE) in a radio resource control (radio resource control, RRC) connected state and a base station and a core network device need to maintain information about UEs corresponding to multicast service groups. In addition, the multicast services further support MBS session (session) deactivation/activation triggered by a core network, and UEs are unaware of a session status. An MBS session deactivation procedure is for deactivating an MBS data resource of a 5G radio access network (NG-radio access network, NG-RAN) node. The base station may release or not release a radio resource control RRC connection for a UE. However, the UE is not notified currently, and the UE needs to keep monitoring downlink information. This causes an overhead burden of the UE.

Therefore, how to notify a UE of a status of a related service in a timely manner to reduce power consumption of the UE is an urgent problem to be resolved.

### SUMMARY

This application provides a communication method, apparatus, and system. The method can reduce power consumption of UEs.

According to a first aspect, a communication method is provided. The method may be performed by a first communication apparatus. The first communication apparatus may be a communication device or a communication apparatus, for example, a chip, that can support the communication device in implementing a function required in the method. For example, the first communication apparatus is a terminal device, a chip that is disposed in the terminal device and that is configured to implement a function of the terminal device, or another component configured to implement a function of the terminal device. In the following description process, an example in which the first communication apparatus is the terminal device is used for description.

The method may include: A terminal apparatus determines first indication information, where the first indication information indicates a status of a multicast/broadcast service, and the status of the multicast/broadcast service includes an inactive state; and the terminal apparatus stops, based on the first indication information, using a first radio network temporary identifier to monitor a physical downlink control channel corresponding to a multicast/broadcast service traffic channel.

In the method, a network apparatus indicates the status of the multicast/broadcast service to the terminal apparatus. When determining that the status of the multicast/broadcast service is inactive, the terminal apparatus may not monitor the physical downlink control channel corresponding to the multicast/broadcast service traffic channel. This reduces power consumption of the terminal apparatus.

With reference to the first aspect, in some implementations of the first aspect, the terminal apparatus is in a radio resource control inactive state or idle state.

With reference to the first aspect, in some implementations of the first aspect, the first indication information is carried on a multicast broadcast control channel.

In this manner, the network apparatus explicitly indicates the status of the multicast/broadcast service to the terminal apparatus through the multicast broadcast control channel. Both a terminal apparatus that is always in a coverage area of the network apparatus and a terminal apparatus that moves to the coverage area can determine the status of the multicast/broadcast service, thereby reducing complexity of determining the status of the multicast/broadcast service by the terminal apparatus. In addition, the terminal apparatus does not need to enter a connected state, further reducing power consumption of the terminal apparatus.

With reference to the first aspect, in some implementations of the first aspect, that the terminal apparatus determines that the first indication information indicates that the status of the multicast/broadcast service is the inactive state includes: The terminal apparatus receives the first indication information from the network apparatus, where the first indication information indicates that the status of the multicast/broadcast service is the inactive state.

With reference to the first aspect, in some implementations of the first aspect, that the terminal apparatus determines that the first indication information indicates that the status of the multicast/broadcast service is the inactive state includes: The terminal apparatus determines, based on that a multicast session identifier corresponding to the multicast/broadcast service is in a first multicast session identifier set and is not in a second multicast session identifier set, that the status of the multicast/broadcast service is the inactive state, where the first multicast session identifier set is an identifier set received by the terminal apparatus before the terminal apparatus receives the second multicast session identifier set.

In this manner, the network apparatus sends the multicast session identifier to the terminal apparatus, to indicate, based on absence of a multicast session identifier, that the corresponding status of the multicast/broadcast service is inactive, further reducing signaling overheads.

With reference to the first aspect, in some implementations of the first aspect, the terminal apparatus receives configuration information, where the configuration information includes a first parameter, and the first parameter is at least one of the following: a temporary multicast group identifier or a group radio network temporary identifier. That the terminal apparatus determines that the first indication information indicates that the status of the multicast/broadcast service is the inactive state includes: The terminal apparatus determines, based on the first parameter, that the status of the multicast/broadcast service is the inactive state.

In this manner, the network apparatus indicates, based on absence of configuration information, that the corresponding status of the multicast/broadcast service is inactive, thereby reducing signaling overheads and improving flexibility of indicating the service status by the network apparatus.

With reference to the first aspect, in some implementations of the first aspect, the terminal apparatus receives multicast broadcast control channel change notification information, where the multicast broadcast control channel change notification information indicates a multicast/broadcast service status, or the multicast broadcast control channel change notification information indicates that a multicast/broadcast service status changes, and the multicast/broadcast service status includes an active state or an inactive state.

With reference to the first aspect, in some implementations of the first aspect, the terminal apparatus monitors a physical downlink control channel corresponding to the multicast broadcast control channel, where the multicast broadcast control channel carries second indication information, and the second indication information indicates that the status of the multicast/broadcast service is an active state; and/or the terminal apparatus monitors a physical downlink control channel corresponding to a paging channel, where the paging channel carries a paging message, and the paging message indicates that the status of the multicast/broadcast service is an active state.

In this manner, the terminal apparatus may monitor only the physical downlink control channel corresponding to the multicast broadcast control channel, may monitor only the paging message, or may monitor the paging message and the physical downlink control channel corresponding to the multicast broadcast control channel. The terminal apparatus may perform a subsequent communication procedure based on the multicast broadcast control channel and/or the paging message. On the other side, the terminal apparatus does not need to monitor the physical downlink control channel corresponding to the multicast/broadcast service traffic channel, thereby reducing power consumption.

According to a second aspect, a communication method is provided. The method may be performed by a second communication apparatus. The second communication apparatus may be a communication device or a communication apparatus, for example, a chip, that can support the communication device in implementing a function required in the method. For example, the second communication apparatus is a network device (for example, a base station), a chip that is disposed in the network device and that is configured to implement a function of the network device, or another component configured to implement a function of the network device. In the following description process, an example in which the second communication apparatus is the network device is used for description.

The method may include: A network apparatus determines first indication information, and indicates the first indication information based on information about a multicast broadcast control channel, where the first indication information indicates that a status of a multicast/broadcast service is inactive.

With reference to the second aspect, in some implementations of the second aspect, the network apparatus sends the first indication information, where the first indication information is carried on the multicast broadcast control channel.

With reference to the second aspect, in some implementations of the second aspect, the network apparatus sends a third multicast session identifier set and a fourth multicast session identifier set through the multicast broadcast control channel, where the third multicast session identifier set is an identifier set sent by the network apparatus before the network apparatus sends the fourth multicast session identifier set. The third multicast session identifier set includes a multicast session identifier corresponding to the multicast/broadcast service, and the fourth multicast session identifier set does not include the multicast session identifier corresponding to the multicast/broadcast service.

With reference to the second aspect, in some implementations of the second aspect, the information about the multicast broadcast control channel includes configuration information, where the configuration information includes a first parameter, and the first parameter is at least one of the following: a temporary multicast group identifier or a group radio network temporary identifier.

With reference to the second aspect, in some implementations of the second aspect, the network apparatus sends multicast broadcast control channel change notification information, where the multicast broadcast control channel change notification information indicates a multicast/broadcast service status, or the multicast broadcast control channel change notification information indicates that a multicast/broadcast service status changes, and the multicast/broadcast service status includes an active state or an inactive state.

With reference to the second aspect, in some implementations of the second aspect, the network apparatus sends second indication information through the multicast broadcast control channel, where the second indication information indicates that the status of the multicast/broadcast service is an active state; and/or the network apparatus sends a paging message through a paging channel, where the paging message indicates that the status of the multicast/broadcast service is an active state.

It should be understood that the second aspect is a peer-end implementation of the first aspect, and explanations, supplements, and beneficial effects of the first aspect are also applicable to the second aspect. Details are not described herein again.

According to a third aspect, a communication method is provided. The method may be performed by the foregoing first communication apparatus. The method may include: A terminal apparatus determines third indication information based on information from a multicast broadcast control channel; and the terminal apparatus determines, based on the third indication information, that a network apparatus provides a multicast/broadcast service for the terminal apparatus in a radio resource control connected state.

In the method, the terminal apparatus determines, based on the information about the multicast broadcast control channel, whether the network apparatus provides the multicast/broadcast service for the terminal apparatus in the radio resource control connected state, and does not need to monitor a paging message, thereby reducing power consumption.

With reference to the third aspect, in some implementations of the third aspect, the third indication information includes at least one of the following:
the network apparatus providing the multicast/broadcast service for the terminal apparatus only in the radio resource control connected state, the terminal apparatus entering the radio resource control connected state, the network apparatus not providing the multicast/broadcast service for the terminal apparatus in a radio resource control inactive state or idle state, waking up the terminal apparatus, or paging the terminal apparatus.

In this manner, the network apparatus indicates, in a plurality of manners, to provide the multicast/broadcast service for the terminal apparatus in the radio resource control connected state, thereby improving indication flexibility.

With reference to the third aspect, in some implementations of the third aspect, the terminal apparatus receives configuration information through the multicast broadcast control channel, where the configuration information includes a second parameter, and the second parameter is at least one of the following: a temporary multicast group identifier or a group radio network temporary identifier. That a terminal apparatus determines third indication information based on information from a multicast broadcast control channel includes: The terminal apparatus determines the third indication information based on the second parameter.

In this manner, the network apparatus indicates, based on the configuration information, to provide the multicast/broadcast service for the terminal apparatus in the radio resource control connected state, thereby reducing signaling overheads.

With reference to the third aspect, in some implementations of the third aspect, the terminal apparatus receives a third multicast session identifier set and a fourth multicast session identifier set through the multicast broadcast control channel, where the third multicast session identifier set is an identifier set received by the terminal apparatus before the terminal apparatus receives the fourth multicast session identifier set. That a terminal apparatus determines third indication information based on information from a multicast broadcast control channel includes: The terminal apparatus determines the third indication information based on that a multicast session identifier corresponding to the multicast/broadcast service is in the third multicast session identifier set and is not in the fourth multicast session identifier set.

In this manner, the network apparatus sends the multicast session identifier to the terminal apparatus, to indicate, based on absence of a multicast session identifier, that the network apparatus provides the multicast/broadcast service only in the radio resource control connected state, thereby reducing signaling overheads.

According to a fourth aspect, a communication method is provided. The method may include: A network apparatus determines third indication information, where the third indication information is for determining that the network apparatus provides a multicast/broadcast service for a terminal apparatus in a radio resource control connected state; and the network apparatus indicates the third indication information based on information about a multicast broadcast control channel.

With reference to the fourth aspect, in some implementations of the fourth aspect, the third indication information indicates at least one of the following: the network apparatus providing the multicast/broadcast service for the terminal apparatus only in the radio resource control connected state, the terminal apparatus entering the radio resource control connected state, the network apparatus not providing the first multicast/broadcast service for the terminal apparatus in a radio resource control inactive state or idle state, waking up the terminal apparatus, or paging the terminal apparatus.

With reference to the fourth aspect, in some implementations of the fourth aspect, the information about the multicast broadcast control channel includes configuration information, the configuration information includes a second parameter, and the second parameter is at least one of the following: a temporary multicast group identifier or a group radio network temporary identifier.

With reference to the fourth aspect, in some implementations of the fourth aspect, the network apparatus sends a third multicast session identifier set and a fourth multicast session identifier set through the multicast broadcast control channel, where the third multicast session identifier set is an identifier set sent by the network apparatus before the network apparatus sends the fourth multicast session identifier set. The third multicast session identifier set includes a multicast session identifier corresponding to the multicast/broadcast service, and the fourth multicast session identifier set does not include the multicast session identifier corresponding to the multicast/broadcast service.

It should be understood that the fourth aspect is a peer-end implementation of the third aspect, and explanations, supplements, and beneficial effects of the third aspect are also applicable to the fourth aspect. Details are not described herein again.

According to a fifth aspect, a communication method is provided. The method may include: A terminal apparatus receives fourth indication information, where the fourth indication information indicates to release a multicast/broadcast service; and the terminal apparatus performs at least one of the following: deleting a resource block of the multicast/broadcast service, or deleting a configuration of the multicast/broadcast service, where the terminal apparatus is in a radio resource control inactive state or idle state.

In the method, the network apparatus explicitly indicates, based on the indication information, the terminal apparatus to release the multicast/broadcast service, and the terminal apparatus may execute a release procedure in the radio resource control inactive state or idle state, instead of executing the release procedure only after entering a connected state, reducing power consumption of the terminal apparatus, reducing a delay of releasing a service by the terminal apparatus, and improving communication efficiency.

With reference to the fifth aspect, in some implementations of the fifth aspect, the fourth indication information is carried on a multicast broadcast control channel.

In this manner, the indication information is sent through the multicast broadcast control channel, to prevent all idle or inactive terminal apparatuses from entering a connected state to perform a multicast release procedure, further reducing power consumption.

According to a sixth aspect, a communication method is provided. The method may include: A network apparatus determines fourth indication information; and the network apparatus sends the fourth indication information to a terminal apparatus, where the fourth indication information indicates to release a multicast/broadcast service, and the terminal apparatus is in a radio resource control inactive state or idle state.

With reference to the sixth aspect, in some implementations of the sixth aspect, the fourth indication information is carried on a multicast broadcast control channel.

With reference to the sixth aspect, in some implementations of the sixth aspect, the network apparatus sends a session release reply message to a core network apparatus, where the session release reply message includes an identifier of the multicast/broadcast service and an identifier of the terminal apparatus.

In this manner, the network apparatus reports, to the core network apparatus, a released service and identifiers of terminal apparatuses that release the service. The core network apparatus may delete these terminal apparatuses from a maintenance list, and no further maintenance is required, further reducing power consumption. In addition, the core network apparatus does not need to perform a release operation of each terminal apparatus after the terminal apparatus enters a connected state, thereby improving communication efficiency.

According to a seventh aspect, a communication apparatus is provided. The apparatus may include a transceiver module and a processing module. The processing module is configured to determine first indication information, where the first indication information indicates a status of a multicast/broadcast service, and the status of the multicast/broadcast service includes an inactive state. The processing module is further configured to stop, based on the first indication information, using a first radio network temporary identifier to monitor a physical downlink control channel corresponding to a multicast/broadcast service traffic channel.

A network apparatus indicates the status of the multicast/broadcast service to a terminal apparatus. When determining that the status of the multicast/broadcast service is inactive, the terminal apparatus may not monitor the physical downlink control channel corresponding to the multicast/broadcast service traffic channel. This reduces power consumption of the terminal apparatus.

With reference to the seventh aspect, in some implementations of the seventh aspect, the communication apparatus is in a radio resource control inactive state or idle state.

With reference to the seventh aspect, in some implementations of the seventh aspect, the first indication information is carried on a multicast broadcast control channel.

In this manner, the network apparatus explicitly indicates the status of the multicast/broadcast service to the terminal apparatus through the multicast broadcast control channel. Both a terminal apparatus that is always in a coverage area of the network apparatus and a terminal apparatus that moves to the coverage area can determine the status of the multicast/broadcast service, thereby reducing complexity of determining the status of the multicast/broadcast service by the terminal apparatus.

With reference to the seventh aspect, in some implementations of the seventh aspect, the communication apparatus determining that the first indication information indicates that the status of the multicast/broadcast service is the inactive state includes: The transceiver module is configured to receive the first indication information from the network apparatus, where the first indication information indicates that the status of the multicast/broadcast service is the inactive state.

With reference to the seventh aspect, in some implementations of the seventh aspect, the communication apparatus determining that the first indication information indicates that the status of the multicast/broadcast service is the inactive state includes: The processing module determines, based on that a multicast session identifier corresponding to the multicast/broadcast service is in a first multicast session identifier set and is not in a second multicast session identifier set, that the status of the multicast/broadcast service is the inactive state, where the first multicast session identifier set is an identifier set received by the terminal apparatus before the terminal apparatus receives the second multicast session identifier set.

In this manner, the network apparatus sends the multicast session identifier to the terminal apparatus, to indicate, based on absence of a multicast session identifier, that the corresponding status of the multicast/broadcast service is inactive, further reducing signaling overheads.

With reference to the seventh aspect, in some implementations of the seventh aspect, the transceiver module is configured to receive configuration information, where the configuration information includes a first parameter, and the first parameter is at least one of the following: a temporary multicast group identifier or a group radio network temporary identifier. That the processing module is configured to determine that the first indication information indicates that the status of the multicast/broadcast service is the inactive state includes: The processing module is configured to determine, based on the first parameter, that the status of the multicast/broadcast service is the inactive state.

In this manner, the network apparatus indicates, based on absence of configuration information, that the corresponding status of the multicast/broadcast service is inactive, thereby reducing signaling overheads and improving flexibility of indicating the service status by the network apparatus.

With reference to the seventh aspect, in some implementations of the seventh aspect, the transceiver module is configured to receive multicast broadcast control channel change notification information, where the multicast broadcast control channel change notification information indicates a multicast/broadcast service status, or the multicast broadcast control channel change notification information indicates that a multicast/broadcast service status changes, and the multicast/broadcast service status includes an active state or an inactive state.

With reference to the seventh aspect, in some implementations of the seventh aspect, the processing module is configured to monitor a physical downlink control channel corresponding to the multicast broadcast control channel, where the multicast broadcast control channel carries second indication information, and the second indication information indicates that the status of the multicast/broadcast service is an active state; and/or the processing module monitors a physical downlink control channel corresponding to a paging channel, where the paging channel carries a paging message, and the paging message indicates that the status of the multicast/broadcast service is an active state.

In this manner, the terminal apparatus may monitor only the physical downlink control channel corresponding to the multicast broadcast control channel, may monitor only the paging message, or may monitor the paging message and the physical downlink control channel corresponding to the multicast broadcast control channel. The terminal apparatus may perform a subsequent communication procedure based on the multicast broadcast control channel and/or the paging message. On the other side, the terminal apparatus does not need to monitor the physical downlink control channel corresponding to the multicast/broadcast service traffic channel, thereby reducing power consumption.

According to an eighth aspect, a communication apparatus is provided. The apparatus may include a transceiver module and a processing module. The processing module is configured to determine first indication information. The transceiver module is configured to indicate the first indication information based on information about a multicast broadcast control channel, where the first indication information indicates that a status of a multicast/broadcast service is inactive.

With reference to the eighth aspect, in some implementations of the eighth aspect, the transceiver module is configured to send the first indication information, where the first indication information is carried on the multicast broadcast control channel.

With reference to the eighth aspect, in some implementations of the eighth aspect, the transceiver module is configured to send a third multicast session identifier set and a fourth multicast session identifier set through the multicast broadcast control channel, where the third multicast session identifier set is an identifier set sent by the transceiver module before the transceiver module sends the fourth multicast session identifier set. The third multicast session identifier set includes a multicast session identifier corresponding to the multicast/broadcast service, and the fourth multicast session identifier set does not include the multicast session identifier corresponding to the multicast/broadcast service.

With reference to the eighth aspect, in some implementations of the eighth aspect, the information about the multicast broadcast control channel includes configuration information, where the configuration information includes a first parameter, and the first parameter is at least one of the following: a temporary multicast group identifier or a group radio network temporary identifier.

With reference to the eighth aspect, in some implementations of the eighth aspect, the transceiver module is further configured to send multicast broadcast control channel change notification information, where the multicast broadcast control channel change notification information indicates a multicast/broadcast service status, or the multicast broadcast control channel change notification information indicates that a multicast/broadcast service status changes, and the multicast/broadcast service status includes an active state or an inactive state.

With reference to the eighth aspect, in some implementations of the eighth aspect, the transceiver module is configured to send second indication information through the multicast broadcast control channel, where the second indication information indicates that the status of the multicast/broadcast service is an active state; and/or the transceiver module sends a paging message through a paging channel, where the paging message indicates that the status of the multicast/broadcast service is an active state.

It should be understood that the eighth aspect is a peer-end implementation of the seventh aspect, and explanations, supplements, and beneficial effects of the seventh aspect are also applicable to the eighth aspect. Details are not described herein again.

According to a ninth aspect, a communication apparatus is provided. The apparatus may include a transceiver module and a processing module. The processing module is configured to determine third indication information based on information from a multicast broadcast control channel. The processing module is further configured to determine, based on the third indication information, that a network apparatus provides a multicast/broadcast service for the communication apparatus in a radio resource control connected state.

The terminal apparatus determines, based on the information about the multicast broadcast control channel, whether the network apparatus provides the multicast/broadcast service for the terminal apparatus in the radio resource control connected state, and does not need to monitor a paging message, thereby reducing power consumption.

With reference to the ninth aspect, in some implementations of the ninth aspect, the third indication information indicates at least one of the following: the network apparatus providing the multicast/broadcast service for the communication apparatus only in the radio resource control connected state, the communication apparatus entering the radio resource control connected state, the network apparatus not providing the multicast/broadcast service for the communication apparatus in a radio resource control inactive state or idle state, waking up the communication apparatus, or paging the communication apparatus.

In this manner, the network apparatus indicates, in a plurality of manners, to provide the multicast/broadcast service for the terminal apparatus in the radio resource control connected state, thereby improving indication flexibility.

With reference to the ninth aspect, in some implementations of the ninth aspect, the transceiver module is configured to receive configuration information through the multicast broadcast control channel, where the configuration information includes a second parameter, and the second parameter is at least one of the following: a temporary multicast group identifier or a group radio network temporary identifier. That the processing module determines third indication information based on information from a multicast broadcast control channel includes: The processing module is configured to determine the third indication information based on the second parameter.

In this manner, the network apparatus indicates, based on the configuration information, to provide the multicast/broadcast service for the terminal apparatus in the radio resource control connected state, thereby reducing signaling overheads.

With reference to the ninth aspect, in some implementations of the ninth aspect, that the transceiver module is configured to receive a third multicast session identifier set and a fourth multicast session identifier set through the multicast broadcast control channel, where the third multicast session identifier set is an identifier set received by the transceiver module before the transceiver module receives the fourth multicast session identifier set. That the processing module is configured to determine third indication information based on information from a multicast broadcast control channel includes: The processing module is configured to determine the third indication information based on that a multicast session identifier corresponding to the multicast/broadcast service is in the third multicast session identifier set and is not in the fourth multicast session identifier set.

In this manner, the network apparatus sends the multicast session identifier to the terminal apparatus, to indicate, based on absence of a multicast session identifier, that the multicast/broadcast service is provided in the radio resource control connected state, thereby reducing signaling overheads.

According to a tenth aspect, a communication apparatus is provided. The apparatus may include a transceiver module and a processing module. The processing module is configured to determine third indication information, where the third indication information is for determining that the communication apparatus provides a multicast/broadcast service for a terminal apparatus in a radio resource control connected state. The transceiver module indicates the third indication information based on information about a multicast broadcast control channel.

With reference to the tenth aspect, in some implementations of the tenth aspect, the third indication information indicates at least one of the following: the communication apparatus providing the multicast/broadcast service for the terminal apparatus only in the radio resource control connected state, the terminal apparatus entering the radio resource control connected state, the communication apparatus not providing the first multicast/broadcast service for the terminal apparatus in a radio resource control inactive state or idle state, waking up the terminal apparatus, or paging the terminal apparatus.

With reference to the tenth aspect, in some implementations of the tenth aspect, the information about the multicast broadcast control channel includes configuration information, the configuration information includes a second parameter, and the second parameter is at least one of the following: a temporary multicast group identifier or a group radio network temporary identifier.

With reference to the tenth aspect, in some implementations of the tenth aspect, the transceiver module is configured to send a third multicast session identifier set and a fourth multicast session identifier set through the multicast broadcast control channel, where the third multicast session identifier set is an identifier set sent by the transceiver module before the transceiver module sends the fourth multicast session identifier set. The third multicast session identifier set includes a multicast session identifier corresponding to the multicast/broadcast service, and the fourth multicast session identifier set does not include the multicast session identifier corresponding to the multicast/broadcast service.

It should be understood that the tenth aspect is a peer-end implementation of the ninth aspect, and explanations, supplements, and beneficial effects of the ninth aspect are also applicable to the tenth aspect. Details are not described herein again.

According to an eleventh aspect, a communication apparatus is provided. The apparatus may include a transceiver module and a processing module. The transceiver module is configured to receive fourth indication information, where the fourth indication information indicates to release a multicast/broadcast service. The processing module is configured to perform at least one of the following: deleting a resource block of the multicast/broadcast service, or deleting a configuration of the multicast/broadcast service, where the communication apparatus is in a radio resource control inactive state or idle state.

A network apparatus explicitly indicates, based on the indication information, a terminal apparatus to release the multicast/broadcast service, and the terminal apparatus may execute a release procedure in the radio resource control inactive state or idle state, instead of executing the release procedure only after entering a connected state, reducing power consumption of the terminal apparatus, reducing a delay of releasing a service by the terminal apparatus, and improving communication efficiency.

With reference to the eleventh aspect, in some implementations of the eleventh aspect, the fourth indication information is carried on a multicast broadcast control channel.

In this manner, the indication information is sent through the multicast broadcast control channel, to prevent all idle or inactive terminal apparatuses from entering a connected state to perform a multicast release procedure, further reducing power consumption.

According to a twelfth aspect, a communication apparatus is provided. The apparatus may include a transceiver module and a processing module. The processing module is configured to determine fourth indication information. The transceiver module is configured to send the fourth indication information to a terminal apparatus, where the fourth indication information indicates to release a multicast/broadcast service, and the terminal apparatus is in a radio resource control inactive state or idle state.

With reference to the twelfth aspect, in some implementations of the twelfth aspect, the fourth indication information is carried on a multicast broadcast control channel.

With reference to the twelfth aspect, in some implementations of the twelfth aspect, the communication apparatus sends a session release reply message to a core network apparatus, where the session release reply message includes an identifier of the multicast/broadcast service and an identifier of the terminal apparatus.

In this manner, the network apparatus reports, to the core network apparatus, a released service and identifiers of terminal apparatuses that release the service. The core network apparatus may delete these terminal apparatuses from a maintenance list, and no further maintenance is required, further reducing power consumption. In addition, the core network apparatus does not need to perform a release operation of each terminal apparatus after the terminal apparatus enters a connected state, thereby improving communication efficiency.

According to a thirteenth aspect, a communication apparatus is provided. The apparatus is configured to perform the method provided in the first aspect, the third aspect, or the fifth aspect. Specifically, the communication apparatus may be configured to perform the method provided in any one of the first aspect, the third aspect, the fifth aspect, or the implementations of the first aspect, the third aspect, or the fifth aspect.

In an implementation, the communication apparatus is a transmitting-end device, for example, a network apparatus. When the communication apparatus is the transmitting-end device, a communication unit may be a transceiver or an input/output interface, and a processing unit may be at least one processor. Optionally, the transceiver may be a transceiver circuit. Optionally, the input/output interface may be an input/output circuit.

In another implementation, the communication apparatus is a chip, a chip system, or a circuit in the transmitting-end device. When the communication apparatus is the chip, the chip system, or the circuit in the transmitting-end device, a communication unit may be an input/output interface, an interface circuit, an output circuit, an input circuit, a pin, a related circuit, or the like on the chip, the chip system, or the circuit, and a processing unit may be at least one processor, processing circuit, logic circuit, or the like.

According to a fourteenth aspect, a communication apparatus is provided. The apparatus is configured to perform the method provided in the second aspect, the fourth aspect, or the sixth aspect. Specifically, the communication apparatus may be configured to perform the method provided in any one of the second aspect, the fourth aspect, the sixth aspect, or the implementations of the second aspect, the fourth aspect, or the sixth aspect.

In an implementation, the communication apparatus is a receiving-end device, for example, a terminal apparatus. When the communication apparatus is the receiving-end device, a communication unit may be a transceiver or an input/output interface, and a processing unit may be at least one processor. Optionally, the transceiver may be a transceiver circuit. Optionally, the input/output interface may be an input/output circuit.

In another implementation, the communication apparatus is a chip, a chip system, or a circuit in the receiving-end device. When the communication apparatus is the chip, the chip system, or the circuit in the receiving-end device, a communication unit may be an input/output interface, an interface circuit, an output circuit, an input circuit, a pin, a related circuit, or the like on the chip, the chip system, or the circuit, and a processing unit may be at least one processor, processing circuit, logic circuit, or the like.

According to a fifteenth aspect, a communication apparatus is provided, and includes a processor. Optionally, a memory is further included. The processor is configured to control a transceiver to receive and send a signal. The memory is configured to store a computer program. The processor is configured to invoke the computer program from the memory and run the computer program, so that the communication apparatus performs the method according to any one of the first aspect, the third aspect, the fifth aspect, or the possible implementations of the first aspect, the third aspect, or the fifth aspect.

Optionally, there are one or more processors, and there are one or more memories.

Optionally, the memory may be integrated with the processor, or the memory and the processor are separately disposed.

Optionally, the communication apparatus further includes the transceiver. The transceiver may be specifically a transmitter machine (transmitter) and a receiver machine (receiver).

According to a sixteenth aspect, a communication apparatus is provided, and includes a processor. Optionally, a memory is further included. The processor is configured to control a transceiver to receive and send a signal. The memory is configured to store a computer program. The processor is configured to invoke the computer program from the memory and run the computer program, so that the communication apparatus performs the method provided in any one of the second aspect, the fourth aspect, the sixth aspect, or the possible implementations of the second aspect, the fourth aspect, or the sixth aspect.

Optionally, there are one or more processors, and there are one or more memories.

Optionally, the memory may be integrated with the processor, or the memory and the processor are separately disposed.

Optionally, the communication apparatus further includes the transceiver. The transceiver may be specifically a transmitter machine (transmitter) and a receiver machine (receiver).

According to a seventeenth aspect, a communication system is provided, and includes: a terminal apparatus, configured to perform the method according to any one of the first aspect, the third aspect, the fifth aspect, or the possible implementations of the first aspect, the third aspect, or the fifth aspect; and a network apparatus, configured to perform the method according to any one of the second aspect, the fourth aspect, the sixth aspect, or the possible implementations of the second aspect, the fourth aspect, or the sixth aspect.

According to an eighteenth aspect, a computer-readable storage medium is provided. The computer-readable storage medium stores a computer program or code. When the computer program or code is run on a computer, the computer is enabled to perform the method according to any one of the first aspect, the third aspect, the fifth aspect, or the possible implementations of the first aspect, the third aspect, or the fifth aspect, or the method according to any one of the second aspect, the fourth aspect, the sixth aspect, or the implementations of the second aspect, the fourth aspect, or the sixth aspect.

According to a nineteenth aspect, a chip is provided, and includes at least one processor. The at least one processor is coupled to a memory, the memory is configured to store a computer program, and the processor is configured to invoke the computer program from the memory and run the computer program, so that a terminal apparatus in which the chip is installed performs the method in any one of the first aspect, the third aspect, the fifth aspect, or the possible implementations of the first aspect, the third aspect, or the fifth aspect, and a network apparatus in which the chip is installed performs the method according to any one of the second aspect, the fourth aspect, the sixth aspect, or the possible implementations of the second aspect, the fourth aspect, or the sixth aspect.

The chip may include an input circuit or interface configured to send information or data, and an output circuit or interface configured to receive information or data.

According to a twentieth aspect, a computer program product is provided. The computer program product includes computer program code. When the computer program code is run by a terminal apparatus, the method in any one of the first aspect, the third aspect, the fifth aspect, or the possible implementations of the first aspect, the third aspect, or the fifth aspect is performed. When the computer program code is run by a network apparatus, the method in any one of the second aspect, the fourth aspect, the sixth aspect, or the implementations of the second aspect, the fourth aspect, or the sixth aspect is performed.

### BRIEF DESCRIPTION OF DRAWINGS

FIG. 1 is a schematic of a communication system applicable to an embodiment of this application;
FIG. 2 is a schematic flowchart of a MBS session;
FIG. 3 is a schematic flowchart of a multicast/broadcast session and a schematic of a protocol stack;
FIG. 4 is a schematic of a transmission resource of information about a multicast/broadcast session;
FIG. 5 is a schematic flowchart of a multicast/broadcast session;
FIG. 6 is a schematic of a paging procedure of a multicast/broadcast session;
FIG. 7 is a schematic of a communication method according to an embodiment of this application;
FIG. 8 is a schematic flowchart of a communication method according to an embodiment of this application;
FIG. 9 is a schematic of another communication method according to an embodiment of this application;
FIG. 10 is a schematic of another communication method according to an embodiment of this application;
FIG. 11 is a schematic flowchart of another communication method according to an embodiment of this application;
FIG. 12 is a schematic of a communication apparatus according to an embodiment of this application; and
FIG. 13 is a schematic of another communication apparatus according to an embodiment of this application.

### DESCRIPTION OF EMBODIMENTS

The following describes technical solutions of embodiments in this application with reference to accompanying drawings.

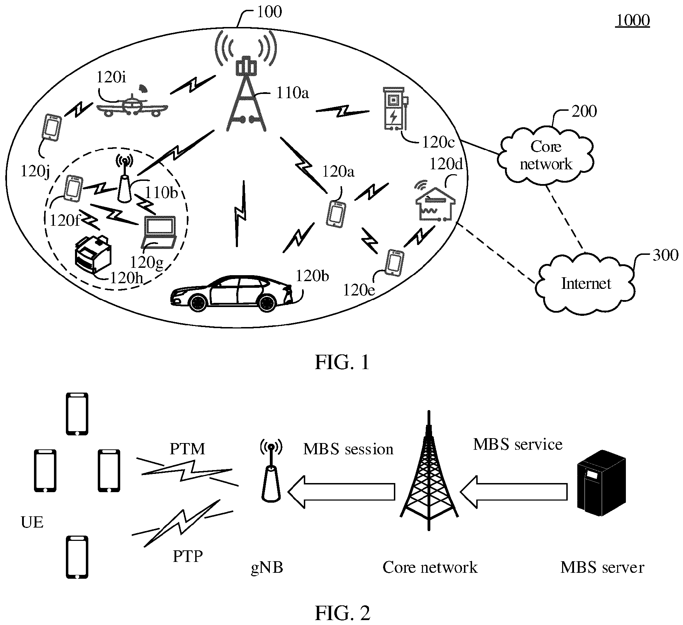

FIG. 1 is a schematic of an architecture of a communication system 1000 used in embodiments of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a schematic. The communication system may further include other network devices, for example, may further include a wireless relay device and a wireless backhaul device, which are not shown in FIG. 1.

The core network device may also be referred to as a core network apparatus, and may include one or more of the following network elements: a unified data management (unified data management, UDM) network element, an application function (application function, AF) network element, a policy control function (policy control function, PCF) network element, a network exposure function (network exposure function, NEF) network element, an access and mobility management function (access and mobility management function, AMF) network element, a session management function (session management function, SMF) network element, a user plane function (user plane function, UPF) network element, and the like. The foregoing network elements may also be referred to as apparatuses, devices, or entities. This is not limited in this application. For example, the UDM network element may also be referred to as a UDM apparatus, a UDM device, or a UDM entity. For ease of description, abbreviations are used below. For example, the "AMF network element" is referred to as "AMF" for short.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that implements some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), may be a micro base station or an indoor base station (for example, 110b in FIG. 1), may be a relay node or a donor node, or the like. A specific technology and a specific device form that are used for the radio access network device are not limited in embodiments of this application. The radio access network device may also be referred to as a network apparatus. For ease of description, the following provides descriptions by using an example in which the radio access network device is a base station.

The terminal may also be referred to as a terminal device, a terminal apparatus, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, a smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used for the terminal are not limited in embodiments of this application.

The base station and the terminal may be fixed or movable. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between a base station and a terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, alternatively, a function of the base station may be performed by a module (for example, a chip) in the base station, or may be performed by a control subsystem including a base station function. The control subsystem including the base station function herein may be a control center in the foregoing application scenarios, such as the smart grid, the industrial control, the smart transportation, and the smart city. Alternatively, a function of the terminal may be performed by a module (for example, a chip or a modem) in the terminal, or may be performed by an apparatus including a terminal function.

The technical solutions provided in embodiments of this application are applied to wireless communication between communication devices. The wireless communication between communication devices may include wireless communication between a network device and a terminal, wireless communication between network devices, and wireless communication between terminal devices. In embodiments of this application, the term "wireless communication" may also be briefly referred to as "communication", and the term "communication" may also be described as "data transmission", "information transmission", or "transmission".

It should be further understood that in this application, the "terminal device" is also referred to as a "terminal apparatus", a "terminal", or the like; the "network device" is also referred to as a "network apparatus", a "network side", or the like; and the "core network device" is also referred to as a "core network apparatus", a "core network", or the like.

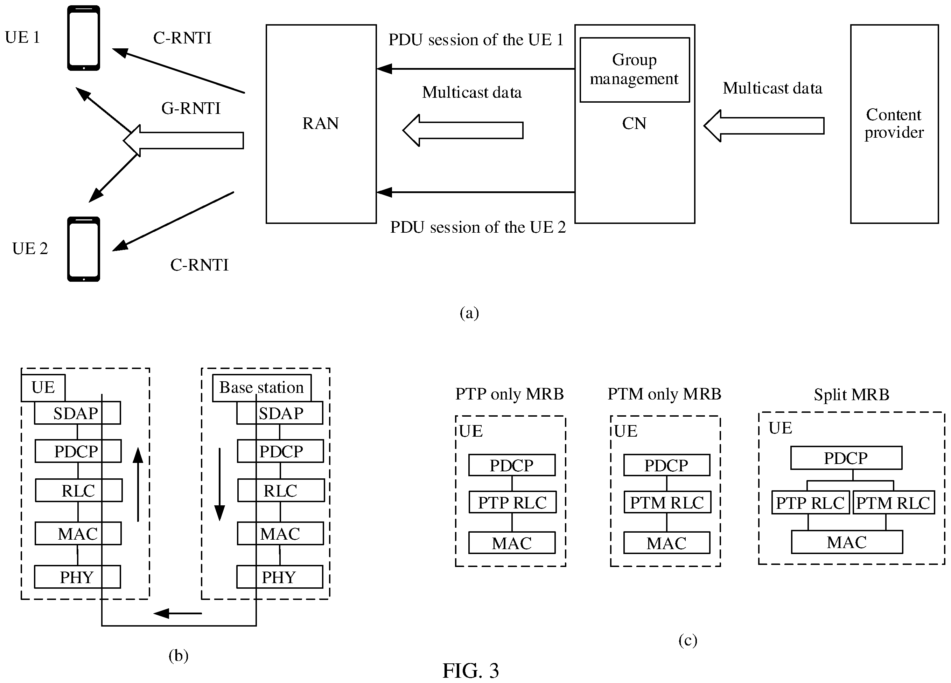

For ease of understanding, related concepts are briefly explained in advance.
1. Multicast/broadcast services (multicast/broadcast services, MBSs) are services, such as live services, public safety services, and batch software update services, oriented to a plurality of terminal devices. As shown in FIG. 2, an MBS service comes from a data server. First, the data server sends MBS data to a core network apparatus, then the core network device sends the MBS data to a base station, and finally the base station sends the MBS data to at least one UE that receives the MBS service.
   When being sent from a core network to the base station, the MBS service is transmitted through a common transmission channel, namely, an MBS session, and each MBS session may include at least one MBS quality of service (quality of service, QoS) flow. When the base station sends a data packet to the UE, the data packet is transmitted through an MBS radio bearer. For one MBS radio bearer, there are two transmission modes: a point-to-multipoint (point to multi-point, PTM) transmission mode and a point-to-point (point to point, PTP) transmission mode.
2. Multicast (multicast) service: Multicast services are designed for services with high QoS requirements. The multicast services can provide a same QoS level as unicast services. Group management needs to be performed for the multicast services. Specifically, as shown in (a) in FIG. 3, for the multicast services, a core network needs to manage joining and leaving of a UE. The transmission between the core network and the base station depends on a protocol data unit session (protocol data unit session, PDU session). Therefore, an MBS QoS flow (flow) is introduced. A radio access network (radio access network, RAN) apparatus supports sending data to the UE in PTP and PTM transmission modes, and supports dynamic switching between PTP and PTM that are controlled by the RAN.

The access network apparatus and a terminal apparatus have a peer-to-peer protocol stack structure for mutual communication. As shown in (b) in FIG. 3, a user plane protocol stack structure may include an RRC layer, a service data adaptation protocol (service data adaptation protocol, SDAP) layer, a PDCP layer, an RLC layer, a MAC layer, a physical (physical, PHY) layer, and the like. The physical layer is located at a lowest layer (layer 1), the MAC layer, the RLC layer, the PDCP layer, and the SDAP layer belong to a second layer (layer 2), and the RRC layer belongs to a third layer (layer 3). For a user plane protocol stack of MBS transmission, data is transmitted in a direction shown by an arrow in the figure (for an MBS service, a transmission direction is from a base station to a UE). The data first arrives at an SDAP layer of the base station, and is transmitted to a corresponding PDCP entity after being mapped at the SDAP layer. After being processed by a PDCP layer of the base station, the data is transmitted to an RLC layer and a MAC layer. After being correspondingly processed, the data is sent from a physical layer, and is transmitted to a UE side through an air interface. Then, each protocol layer on the UE side sequentially performs corresponding processing on a data packet according to a processing sequence opposite to that of the base station. On a base station side and the UE side, processing of the data packet at each layer may be visually combined into a radio bearer. Each piece of data in the radio bearer needs to be processed at each layer, and each layer has a corresponding functional entity to perform a corresponding function. Each radio bearer configuration includes one PDCP entity, each radio bearer configuration is associated with at least one RLC entity, and each RLC entity corresponds to one logical channel.

For an MBS, user-plane data is carried by an MRB. Specifically, the MRB includes the following three types: a PTP only MRB, a PTM only MRB, and a split MRB (PTP MRB + PTM MRB). As shown in (c) in FIG. 3, the PTP only MRB is associated with one PTP RLC entity, the PTM only MRB is associated with one PTM RLC entity, and the split MRB is associated with one PTM RLC entity and one PTP RLC entity. PTM RLC is the same for a plurality of UEs, and the plurality of UEs use a same group radio network temporary identifier (group radio network temporary identifier, g-RNTI) for descrambling. PTP RLC is independent for each UE, and each UE uses a respective cell radio network temporary identifier (cell radio network temporary identifier, C-RNTI) for monitoring.

It should be understood that in embodiments of this application, a G-RNTI and the g-RNTI may be replaced with each other, and the C-RNTI and a c-RNTI may be replaced with each other. This is not limited in embodiments of this application.

The multicast services can be provided only for UEs in a radio resource control (radio resource control, RRC) connected state. An access network device and a core network device need to maintain UE information corresponding to a multicast/broadcast service group. The multicast services further support MBS session (session) deactivation or activation triggered by a core network, and UEs are unaware of a service status. Optionally, two communication parties in a multicast service may send data within a limited area range, or send different content in different areas.

3. Multicast broadcast control channel and multicast/broadcast service traffic channel: Two logical channels are introduced in an NR MBS broadcast technology: a multicast broadcast control channel (MBS control channel, MCCH) and a multicast/broadcast service traffic channel (MBS traffic channel, MTCH). The MCCH is for transmitting control information, including configuration information of the MTCH, such as a g-RNTI and a DRX parameter corresponding to the MTCH. The MCCH is sent periodically. The logical channel MTCH carries user data of a broadcast service. The MTCH is scheduled by using the MCCH. The MTCH is configured per (per) g-RNTI, that is, per MBS service. The base station schedules service data to a plurality of UEs by using the g-RNTI, and each g-RNTI may be associated with at least one broadcast service.

It should be understood that, in different communication systems, the foregoing channels may correspond to different names. For example, in a 4th generation (4th generation, 4G) communication system, a multicast/broadcast service control channel may be a single-cell multicast/broadcast service control channel (single cell MCCH, SC-MCCH). For another example, in a 5G communication system, the multicast/broadcast service control channel may be an MC-MCCH. In a future technology development process, a channel having a function similar to that of the multicast/broadcast service control channel may have another name, or in different communication environments, communication scenarios, or communication technologies, channels having a same function may have different names. However, channel content and functions are not limited by different names of channels that have a similar or same function in different systems. In this application, the multicast broadcast control channel may be for transmitting control information, and the multicast/broadcast service traffic channel may be for transmitting user data.

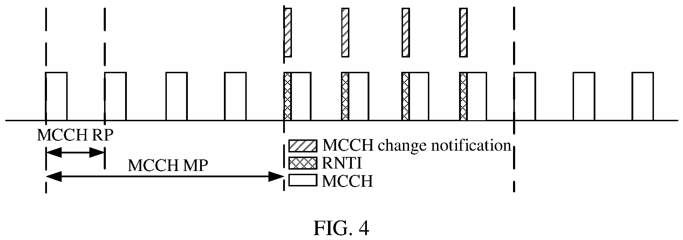

Unless otherwise specified, in this application, the MCCH is for representing the multicast/broadcast service control channel, and the MTCH is for representing the multicast/broadcast service traffic channel. It should be further understood that other English acronyms in this application are similar to this. Details are not described again.
4. Multicast broadcast control channel change notification (MCCH change notification): As shown in FIG. 4, an MCCH is repeatedly sent in each modification period (Modification period, MP), a repetition period (repetition period, RP) is included in the figure. In one MP, content of MCCHs is the same. When an MCCH changes in different MPs, a network device sends a PDCCH including a change notification, where the change notification is an MCCH change notification. When a UE detects, on the PDCCH, a field, for example, 2 bits, corresponding to the MCCH change notification, it is considered that the change notification is detected, and the UE re-obtains an MCCH. When obtaining the MCCH, the UE needs to detect the PDCCH scrambled by an MCCH-RNTI, to obtain scheduling information of the MCCH. The first bit in the MCCH change notification indicates that an MCCH change reason is session start, and the second bit in the MCCH change notification indicates that an MCCH change reason is session change, session stop, or neighbor cell list update.
5. RRC state: There are three RRC states in NR: RRC idle (RRC_IDLE), RRC inactive (RRC_INACTIVE), and RRC connected (RRC_CONNECTED). The following briefly describes the three RRC states.
   (1) RRC_CONNECTED (RRC connected): A RAN has a UE context and a UE has a signaling connection with the RAN. The UE may receive a system message and a message that is delivered by the RAN and that is for controlling the UE to perform data transmission and handover and notifying the UE of related scheduling information, and the RAN may receive channel quality information fed back by the UE.
   (2) RRC_INACTIVE (RRC inactive): A connection between a RAN and a core network is maintained, and no resource is allocated over an air interface. In this case, services can be quickly restored, improving delay-sensitive application experience. In addition, a power saving effect of a user in an inactive state is close to that of the user in an idle state, prolonging a battery life of a mobile phone.
   (3) RRC_IDLE (RRC idle): A RAN does not have a UE context, and a UE has no signaling connection with the RAN. In this state, the UE can receive a system message and a paging message for cell selection and reselection. When a UE needs to set up a connection with a network for a specific purpose (service request, location update, paging, or the like), RRC connection setup is triggered. After an RRC connection is set up, the UE enters an RRC connected state.

It should be understood that an RRC non-connected state in this application may be the RRC idle state and/or the RRC inactive state. The non-connected state in this application may be replaced with the RRC idle state and/or the RRC inactive state.

6. Multicast session identifier (MBS session ID): The MBS session ID is for identifying a service. For example, one multicast session identifier may be associated with one service. The multicast session identifier may be a temporary multicast group identifier (temporary multicast group identifier, TMGI).

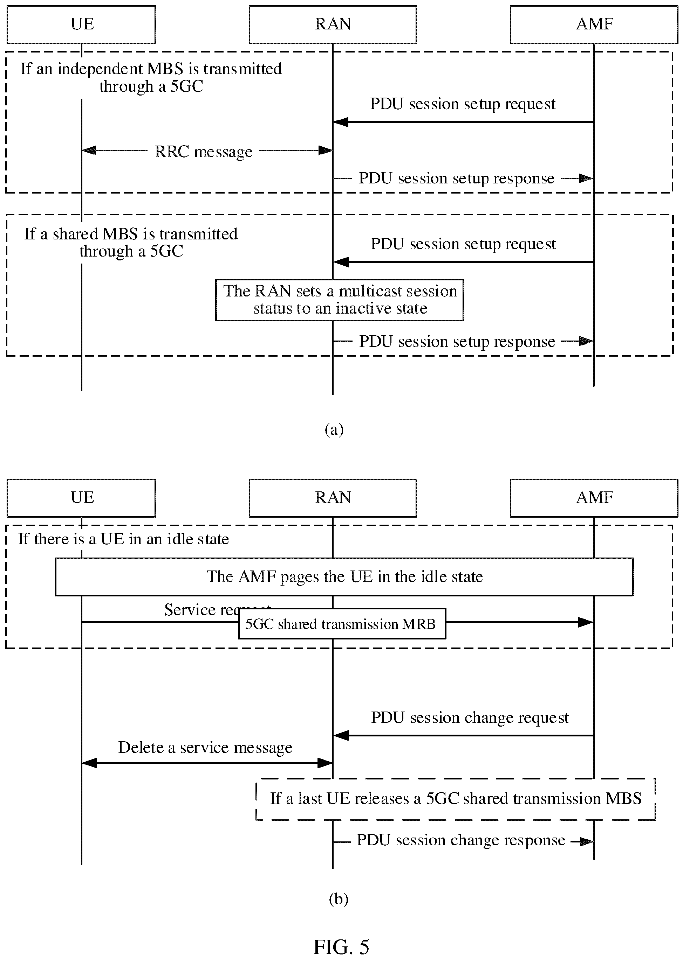

An MBS session deactivation process applies to multicast. As shown in (a) in FIG. 5, the MBS session deactivation procedure is triggered by a multicast session management function (MB session management function, MB-SMF) network element. When the MB-SMF receives a notification from a user plane function (MB user plane function, MB-UPF) network element when there is no downlink data to be transmitted within a period of time, or when the MB-SMF receives a request directly from an application function (application function, AF) network element or forwarded by a network exposure function (network exposure function, NEF), the MBS session deactivation procedure is for deactivating an MBS data resource of a 5G access network (NG-RAN) node. When triggered by a 5G core network (5GC), the RAN releases a radio resource of a multicast session and stops transmitting multicast session data to a UE. A base station may release or not release an RRC connection for the UE, but does not notify the UE. A multicast session state changes from an active (active) state to an inactive (inactive) state. In other words, the inactive state may be that a current service of the UE is in the inactive state, or a session (session) about a current service is in the inactive state. When a related service of the UE is in the inactive state, the base station may indicate the UE to release the service.

The foregoing release procedure is shown in (b) in FIG. 5. The MBS release procedure is triggered by the core network. When the CN decides to release a multicast service or remove a UE from the multicast service, the preceding procedure can be performed. If the CN determines that there is a CM-idle UE, the CN initiates paging to enable the UE to enter a connected state for a subsequent release procedure. Specifically, a sent message may be a group paging message (when the base station supports multicast), or may be a unicast paging message (when the base station does not support multicast, a multicast service is provided in a unicast manner).

It should be understood that, unless otherwise specified in this application, a status of the multicast/broadcast service may also be understood as a status of a multicast/broadcast session, releasing of the multicast/broadcast session service may also be understood as releasing the multicast/broadcast session, and the service may be understood as the multicast/broadcast service. In other words, unless otherwise specified in this application, the "service" and the "session" may be replaced with each other.

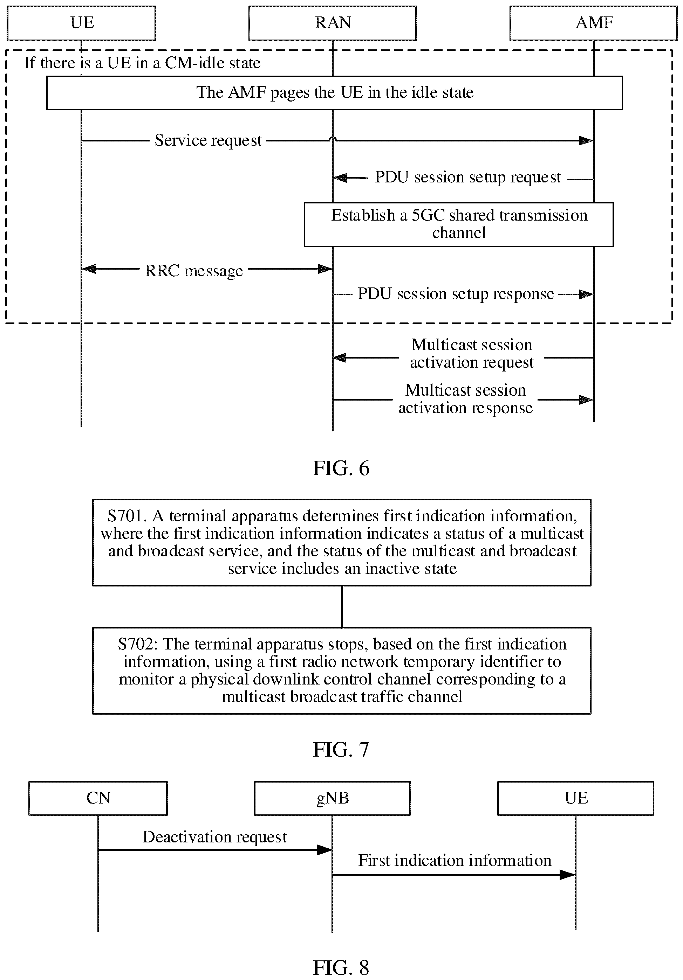

An MBS session activation process applies only to multicast. As shown in FIG. 6, the MBS session activation process is triggered by an MB-SMF. When the MB-SMF receives a notification of MBS downlink data from an MB-UPF, or when the MB-SMF receives a request directly from an AF or forwarded by an NEF, the MBS session activation procedure is triggered. The MBS session activation procedure is for activating an MBS data resource of an NG-RAN node, for example, setting up radio resources for multicast sessions and transmitting multicast session data to a UE. In addition, UEs that join a multicast session and that are in a connection management idle (connection management-IDLE, CM-IDLE) state and a CM-CONNECTED + RRC inactive state are paged (paging). An AF request or a data notification of the MB-UPF may trigger an activation procedure of these UEs, and a multicast session state changes from an inactive state to an active state. In the figure, a message used by an AMF to page a UE in the CM-idle state may be a group paging message (when the base station supports multicast), or may be a unicast paging message (when the base station does not support multicast, a multicast service is provided in a unicast manner). When the AMF sends a multicast session activation request (multicast session activation request) message to the RAN, a paging procedure of the RAN may be triggered.

The current multicast service deactivation is sent by a core network device to the base station, and the base station may release or not release a connection to the UE, but does not notify the UE of a deactivation message. For an idle/inactive UE, if the UE is not notified of multicast deactivation, the UE needs to monitor a multicast broadcast control channel and the multicast/broadcast service traffic channel all the time. For a UE in the connected state, a multicast service may be released by using dedicated signaling and non-access stratum (non-access stratum, NAS) signaling. However, for a UE in the idle state or the inactive state, the UE further needs to be paged to enter the connected state, and then a multicast service is released by using dedicated signaling, which additionally increases a burden.

For the foregoing problem, an embodiment of this application provides a communication method, to notify a UE of a service status in a timely manner, thereby preventing the UE from continuously monitoring multicast service configuration information or multicast service data, and reducing power consumption of the UE. As shown in FIG. 7, the method includes the following steps.

S701. A terminal apparatus determines first indication information, where the first indication information indicates a status of a multicast/broadcast service, and the status of the multicast/broadcast service includes an inactive state.

The status of the multicast/broadcast service includes two types: inactive and active. That the terminal apparatus determines the first indication information may be: The terminal apparatus receives the first indication information from a network apparatus, or the terminal apparatus determines the first indication information based on related information. For example, the terminal apparatus may determine the first indication information based on a multicast/broadcast session identifier or configuration information, where the configuration information may be configuration information of the multicast/broadcast service. The following describes the two manners in detail.

It should be understood that the terminal apparatus is in a radio resource control inactive (RRC inactive) state or idle (IDLE) state.

Manner 1: The network apparatus sends the first indication information to the terminal apparatus. Correspondingly, the terminal apparatus receives the first indication information from the network apparatus. The first indication information indicates that a status of a service #A is inactive, and the terminal apparatus determines, based on the first indication information, that the status of the service #A is inactive. The service #A is a multicast/broadcast service. The following uses the service #A as an example for description.

There are a plurality of implementations in which the first indication information indicates that the status of the service #A is inactive. For example, the first indication information may indicate the status of the multicast/broadcast service by using a field or a bit value, or the first indication information may indicate the status of the multicast/broadcast service by using a field that indicates a multicast/broadcast service status or in a bit absent manner. The following provides detailed descriptions with reference to implementations 1 to 3.

Implementation 1: The first indication information may be associated with a multicast session identifier (MBS session ID), the first indication information indicates a status of a multicast/broadcast service corresponding to the multicast session identifier, and the multicast session identifier identifies the service #A. That is, the terminal apparatus receives a multicast session identifier and indication information associated with the multicast session identifier, and parses the multicast session identifier and the indication information to obtain the status of the service #A.

The first indication information may indicate the status of the multicast/broadcast service by using a field or a bit value. For example, the first indication information may be 1 bit. A value of the bit may be used for the status of the multicast/broadcast service. For example, if the value of the bit is 1, it indicates that the status of the multicast/broadcast service is inactive; and if the value of the bit is 0, it indicates that the status of the multicast/broadcast service is active. Alternatively, if the value of the bit is 0, it indicates that the status of the multicast/broadcast service is inactive; and if the value of the bit is 1, it indicates that the status of the multicast/broadcast service is active. This is not limited in embodiments of this application. The foregoing correspondence between a bit value and a status of a multicast/broadcast service may be predefined, or may be sent by the network apparatus to the terminal apparatus. The network apparatus may send the correspondence to the terminal apparatus in a broadcast, multicast, or unicast manner. This is not limited in embodiments of this application. It should be further understood that the foregoing quantity of bits is described by using only 1 bit as an example. This is not limited in embodiments of this application. For example, the status may be indicated by using 2 bits, 3 bits, or the like.

It should be understood that the first indication information may be carried on a multicast broadcast control channel. The multicast/broadcast service control channel is for transmitting the configuration information of the multicast/broadcast service to the terminal apparatus.

Further, the network apparatus may send at least one multicast/broadcast session identifier to the terminal apparatus. Correspondingly, the terminal apparatus receives the at least one multicast/broadcast session identifier, where the at least one multicast/broadcast session identifier is in one-to-one correspondence with at least one service, and the at least one service includes the service #A. It may be understood that the at least one multicast/broadcast session identifier may be associated with a plurality of pieces of indication information, and the plurality of pieces of indication information include the first indication information. For example, some multicast/broadcast session identifiers may be associated with status indication information of a corresponding service, or all multicast/broadcast session identifiers may be associated with status indication information of a corresponding service. The following uses an example in which the multicast/broadcast session identifier is a temporary multicast group identifier (temporary multicast group identifier, TMGI) to describe a method for determining the status of the multicast/broadcast service by the terminal apparatus.

The network apparatus sends N TMGIs to the terminal apparatus. Correspondingly, the terminal apparatus receives the N TMGIs, where the N TMGIs are in one-to-one correspondence with N services, and each of the N TMGIs is associated with service status indication information, where N is a positive integer. A TMGI #A is associated with status indication information of the service #A, a TMGI #B is associated with status indication information of a service #B, a TMGI #C is associated with status indication information of a service #C, and so on. A bit value that is associated with the TMGI #A and that indicates a service status is 1, indicating that the status of the service #A is active. A bit value that is associated with the TMGI #B and that indicates a service status is 1, indicating that a status of the service #B is active. A bit value that is associated with the TMGI #C and that indicates a service status is 0, indicating that a status of the service #C is inactive. It should be understood that a relationship between a bit value and a service status is not limited thereto. For example, the bit value that is associated with the TMGI #A and that indicates the service status is 0, indicating that the status of the service #A is active; the bit value that is associated with the TMGI #B and that indicates the service status is 0, indicating that the status of the service #B is active; and the bit value that is associated with the TMGI #C and that indicates the service status is 1, indicating that the status of the service #C is inactive. It should be understood that the foregoing correspondence between the bit value and the service status may be predefined, or may be sent by the network apparatus to the terminal apparatus. The network apparatus may send, to the terminal apparatus, correspondences between bit values associated with some TMGIs and corresponding service statuses, or the network apparatus may send, to the terminal apparatus, correspondences between bit values associated with all TMGIs and corresponding service statuses. Correspondences between bit values associated with different TMGIs and corresponding service statuses may be different or may be the same. This is not limited in embodiments of this application.

Each of the foregoing plurality of multicast/broadcast session identifiers is associated with indication information. The following provides another indication method. For example, the network apparatus sends N TMGIs to the terminal apparatus. Correspondingly, the terminal apparatus receives the N TMGIs, where the N TMGIs are in one-to-one correspondence with N services.

Implementation 2: That indication information of a status of a service is not associated with a TMGI may indicate that the status of the service is inactive. For example, when N=3, a TMGI #A is associated with indication information of the status of the service #A, a TMGI #B is associated with indication information of a status of a service #B, and indication information of a status of a service #C associated with a TMGI #C is not found. In this case, the terminal apparatus may determine that the status of the service #C is inactive. Specifically, a bit value that is in indication information associated with the TMGI #A and that indicates a service status is 1, indicating that the status of the service #A is active; a bit value that is associated with the TMGI #B and that indicates a service status is 1, indicating that a status of the service #B is active; and a bit that is associated with the TMGI #C and that indicates a service status is not found, that is, the bit that is in the TMGI #C and that indicates the service status is absent, indicating that a status of the service #C is inactive. It should be understood that a relationship between a bit value and a service status is not limited thereto. For example, the bit value that is associated with the TMGI #A and that indicates the service status is 0, indicating that the status of the service #A is active; the bit value that is associated with the TMGI #B and that indicates the service status is 0, indicating that the status of the service #B is active; and the TMGI #C is not associated with the bit that indicates the service status, that is, the bit that is associated with the TMGI #C and that indicates the service status is absent, indicating that the status of the service #C is inactive.

Implementation 3: A bit that is associated with a TMGI and that indicates a service status is not found, that is, the bit that is associated with the TMGI and that indicates the service status is absent, indicating that the service status is active. For example, a bit that is associated with a TMGI #A and that indicates a service status is not found, indicating that the status of the service #A is active; a bit that is associated with a TMGI #B and that indicates a service status is not found, indicating that a status of a service #B is active; and a bit value that is associated with a TMGI #C and that indicates a service status is 0, indicating that a status of a service #C is inactive; or a bit value that is associated with a TMGI #C and that indicates a service status is 1, indicating that a status of a service #C is inactive.

It should be understood that the quantity of bits may also be not limited to 1 bit, for example, may be 2 bits or 3 bits.

It should be further understood that a correspondence between a bit value and a service status in the foregoing method may be predefined, or may be sent by the network apparatus to the terminal apparatus. For details, refer to the foregoing descriptions. Details are not described again.

In the method, the network apparatus explicitly indicates a service status by using a multicast broadcast control channel, and the UE may identify an inactive service, which is the same to a UE that newly moves to this cell. When a UE receives a multicast service in a current cell, if a current status of the service is inactive, the UE may read, from the multicast broadcast control channel, indication information indicating that the service is inactive, so that the UE can be prevented from entering a connected state to initiate a join procedure, thereby reducing power consumption of the UE.

The foregoing manner is an explicit indication manner. The following describes in detail an implicit indication manner.

Manner 2: The terminal apparatus may determine the first indication information based on related information. For example, the terminal apparatus may determine the first indication information based on a multicast/broadcast session identifier or configuration information, where the configuration information may be configuration information of the multicast/broadcast service.

First, a method for determining the first indication information by the terminal apparatus based on the multicast/broadcast session identifier is described.

IImplementation 4: The network apparatus sends at least one multicast/broadcast session identifier to the terminal apparatus. Correspondingly, the terminal apparatus receives the at least one multicast/broadcast session identifier, where the at least one multicast/broadcast session identifier is in one-to-one correspondence with a service, other than a first multicast/broadcast service, in at least one multicast/broadcast service. In other words, the network apparatus sends M multicast/broadcast session identifiers to the terminal apparatus. Correspondingly, the terminal apparatus receives the M multicast/broadcast session identifiers, where the M multicast/broadcast session identifiers are in one-to-one correspondence with services, other than the first multicast/broadcast service, in P services, where M=P-1, and both P and M are positive integers. In other words, absence of a multicast/broadcast session identifier corresponding to a service indicates that a status of the service is inactive. Alternatively, if an identifier, previously received by the terminal apparatus, of a session does not exist, it indicates that a status of the session is inactive. The terminal apparatus may determine, based on absence of a multicast/broadcast session identifier, that a status of a service corresponding to the multicast/broadcast session identifier is inactive.

The following uses an example in which the multicast/broadcast session identifier is a TMGI for description.

For example, the network apparatus sends three TMGIs to the terminal apparatus. Correspondingly, the terminal apparatus receives the three TMGIs, where the three TMGIs are in one-to-one correspondence with three services. The three TMGIs are respectively a TMGI #A, a TMGI #B, and a TMGI #C. The TMGI #A identifies the service #A, the TMGI #B identifies a service #B, and the TMGI #C identifies a service #C. The terminal apparatus obtains the three TMGIs through parsing, and finds that the received information does not include a TMGI #D for identifying a service #D, so that the terminal apparatus can determine that a status of the service #D is inactive.

In another example, the terminal apparatus may determine absence of a TMGI #D based on TMGIs received at different times, to determine that a status of a service #D is inactive. For example, the terminal apparatus receives a first multicast session identifier set, and receives a second multicast session identifier set. If the terminal apparatus determines that the first multicast session identifier set includes the TMGI #D, and the second multicast session identifier set does not include the TMGI #D, the terminal apparatus may determine that the service status of the service #D identified by the TMGI #D is inactive. That is, if a multicast session identifier corresponding to the multicast/broadcast service is in the first multicast session identifier set and is not in the second multicast session identifier set, the terminal apparatus may determine that the status of the multicast/broadcast service is inactive. In other words, if the multicast session identifier corresponding to the multicast/broadcast service is in the first multicast session identifier set and is not in the second multicast session identifier set, the terminal apparatus may determine that the status of the multicast/broadcast service is inactive.

The first multicast session identifier set may be an identifier set received by the terminal apparatus before the terminal apparatus receives the second multicast session identifier set. For example, the first multicast session identifier set may be obtained by the terminal apparatus by reading a multicast broadcast control channel last time, and the second multicast session identifier set may be obtained from the multicast broadcast control channel; or the first multicast session identifier set may be obtained when an RRC connection is released, and the second multicast session identifier set may be obtained by reading a multicast broadcast control channel.

Alternatively, the first multicast session identifier set may be obtained in an RRC connected state, and the second multicast session identifier set may be obtained by reading a multicast broadcast control channel. This is not limited in embodiments of this application.

It may be understood that forms of the first multicast session identifier set and the second multicast session identifier are not limited to a set, and may be a list, or may be a list of a plurality of multicast session identifiers. This is not limited in embodiments of this application.

Implementation 5: The network apparatus sends at least one multicast/broadcast session identifier to the terminal apparatus. Correspondingly, the terminal apparatus receives the at least one multicast/broadcast session identifier, where the at least one multicast/broadcast session identifier is in one-to-one correspondence with at least one service including a service #D. In other words, the network apparatus sends M multicast/broadcast session identifiers to the terminal apparatus. Correspondingly, the terminal apparatus receives the M multicast/broadcast session identifiers, where the M multicast/broadcast session identifiers are in one-to-one correspondence with M services. After obtaining a multicast/broadcast session identifier corresponding to the service #D through parsing, the terminal apparatus may determine that statuses of the service #D and services corresponding to other received multicast/broadcast session identifiers are inactive. In other words, absence of a multicast/broadcast session identifier corresponding to a service indicates that a status of the service is active, and presence of a multicast/broadcast session identifier corresponding to a service indicates that a status of the service is inactive.

The following uses an example in which the multicast/broadcast session identifier is a TMGI for description.

For example, the network apparatus sends one TMGI to the terminal apparatus. Correspondingly, the terminal apparatus receives the TMGI. The TMGI is a TMGI #A, and the TMGI #A identifies the service #A. The terminal apparatus obtains the TMGI #A through parsing, and finds that there is no TMGI for identifying a service #B and no TMGI for identifying a service #C. In this case, the terminal apparatus may determine that the status of the service #A is inactive and service statuses of the service #B and the service #C are both active.

In another example, the terminal apparatus may determine absence of a TMGI #D based on TMGIs received at different times, to determine that a status of a service #D is active. For example, the terminal apparatus receives a first multicast session identifier set, and receives a second multicast session identifier set. If the terminal apparatus determines that the first multicast session identifier set includes the TMGI #D, and the second multicast session identifier set does not include the TMGI #D, the terminal apparatus may determine that the service status of the service #D identified by the TMGI #D is active. That is, if a multicast session identifier corresponding to the multicast/broadcast service is in the first multicast session identifier set and is not in the second multicast session identifier set, the terminal apparatus may determine that the status of the multicast/broadcast service is active. In other words, if the multicast session identifier corresponding to the multicast/broadcast service is in the first multicast session identifier set and is not in the second multicast session identifier set, the terminal apparatus may determine that the status of the multicast/broadcast service is active.

The first multicast session identifier set may be an identifier set received by the terminal apparatus before the terminal apparatus receives the second multicast session identifier set. For example, the first multicast session identifier set may be obtained by the terminal apparatus by reading a multicast broadcast control channel last time, and the second multicast session identifier set may be obtained from the multicast broadcast control channel; or the first multicast session identifier set may be obtained when an RRC connection is released or in an RRC connected state, and the second multicast session identifier set may be obtained by reading a multicast broadcast control channel. This is not limited in embodiments of this application.

It may be understood that forms of the first multicast session identifier set and the second multicast session identifier are not limited to a set, and may be a list, or may be a list of a plurality of multicast session identifiers. This is not limited in embodiments of this application.

In the method, absence of a TMGI implicitly indicates that a status of a service is inactive or active. In this manner, if a UE is receiving a multicast service in an idle state or an inactive state, and detects that a service identifier of a related service is absent, the UE may determine that a status of the service is inactive or active. The UE can obtain the status of the related service in a timely manner, to avoid entering a connected state to initiate a join procedure, thereby reducing power consumption of the UE.

Second, a method for determining the first indication information by the terminal apparatus based on the plurality of pieces of configuration information is described.

Implementation 6: The network apparatus sends the configuration information to the terminal apparatus, where the configuration information may be used by the terminal apparatus to receive the multicast/broadcast service, and the terminal apparatus may determine the status of the multicast/broadcast service based on the received configuration information.

For example, the configuration information may include a first parameter. The first parameter may be at least one of the following: a temporary multicast group identifier or a group radio network temporary identifier. The terminal apparatus may determine, based on the first parameter, that the status of the multicast/broadcast service is inactive or active.

For example, when the configuration information includes only a multicast/broadcast session identifier, the terminal apparatus may determine that a status of a service corresponding to the multicast/broadcast session identifier is inactive. When the configuration information includes other configurations, such as a g-RNTI, an MRB, and DRX, the terminal apparatus may determine that the status of the service corresponding to the multicast/broadcast session identifier is active. An example of the configuration information is as follows:

### Example 1:

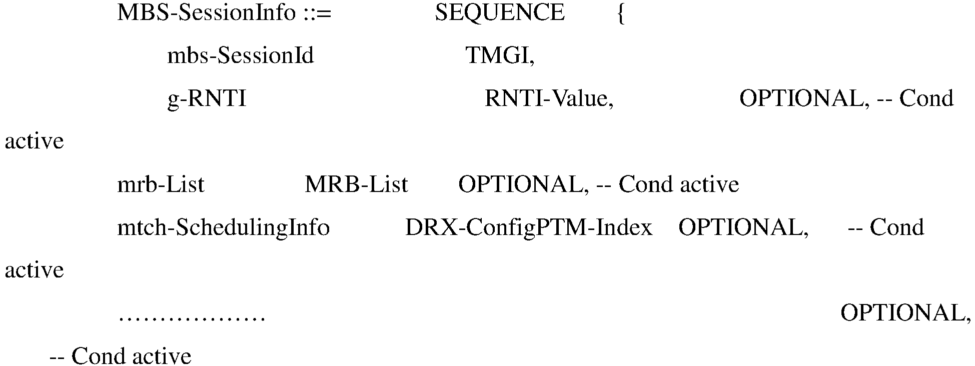

mbs-SessionId TMGI is an example of the multicast/broadcast session identifier. OPTIONAL, -- Cond active indicates that the other configurations exist only when the status of the service is active. The foregoing ellipsis indicates the other configurations that are not mentioned. Similar parts are not described below. When the network apparatus indicates that a service status is inactive, if the foregoing configurations include only the TMGI, the terminal apparatus determines that the configurations include only the TMGI, and may further determine that the service status is inactive. When the network apparatus indicates that a service status is active, if the configurations may include the TMGI, the g-RNTI, the MRB, the DRX, and the like, the terminal apparatus determines that the configurations include the TMGI, the g-RNTI, the MRB, the DRX, and the like, and may further determine that the service status is active. Optionally, the foregoing configurations are merely used as an example rather than a limitation. When the service status is inactive, some other configuration information may also be included, for example, some other configurations that are not mentioned may be included.

For another example, when the first parameter is a g-RNTI: When the network apparatus indicates that the service status is inactive, the configuration information does not include the g-RNTI. The terminal apparatus determines that the configurations do not include the g-RNTI, and may further determine that the service status is inactive. When the network apparatus indicates that the service status is active, the configuration information includes the g-RNTI. The terminal apparatus determines that the configurations include the g-RNTI, and may further determine that the service status is active. When the network apparatus indicates that the service status is inactive, the configuration information includes the g-RNTI. The terminal apparatus determines that the configurations include the g-RNTI, and may further determine that the service status is inactive. When the network apparatus indicates that the service status is active, the configuration information does not include the g-RNTI. The terminal apparatus determines that the configurations do not include the g-RNTI, and may further determine that the service status is active.

### Example 2:

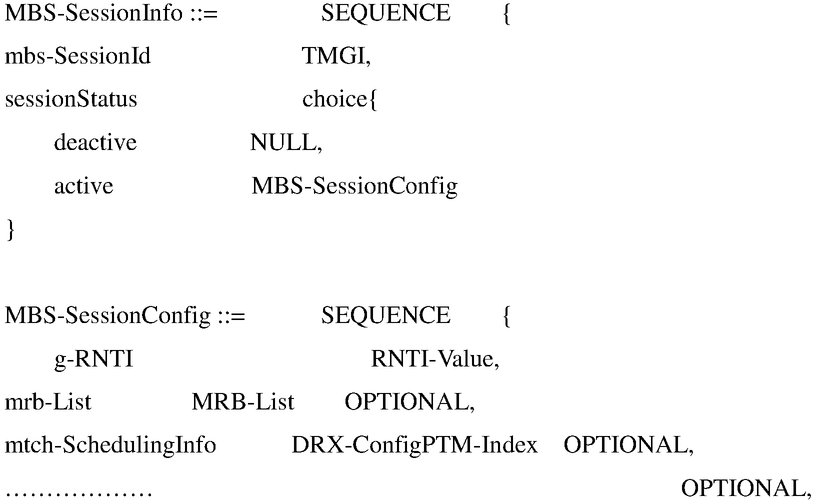

mbs-SessionId TMGI is an example of the multicast/broadcast session identifier. When the service status is inactive, only the TMGI is included in the configurations. When the service status is active, the configuration information may include the g-RNTI, the MRB, the DRX, and the like. Optionally, the foregoing configurations are merely used as an example rather than a limitation. When the service status is inactive, some other configuration information may also be included, for example, some other configurations that are not mentioned may be included. Specifically, for a method for indicating the service status by the network apparatus and a method for determining the service status by the terminal apparatus, refer to related descriptions in the foregoing example 1. Details are not described again.

For another example, when the configuration information includes only the multicast/broadcast session identifier and the group radio network temporary identifier, the terminal apparatus may determine that the status of the service corresponding to the multicast/broadcast session identifier is inactive. An example of the configuration information is as follows:

### Example 3:

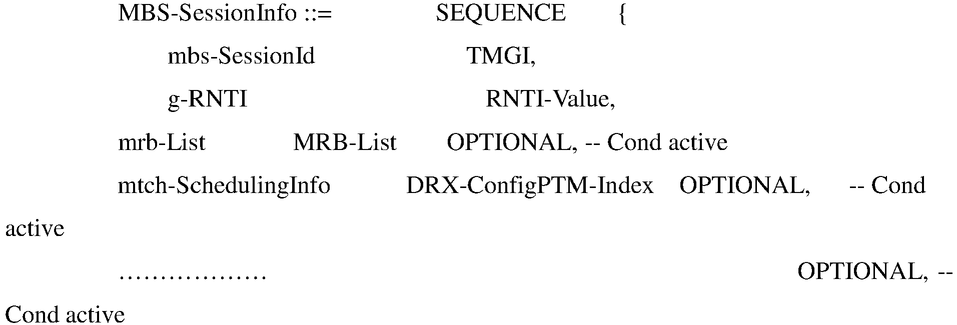

### Example 4:

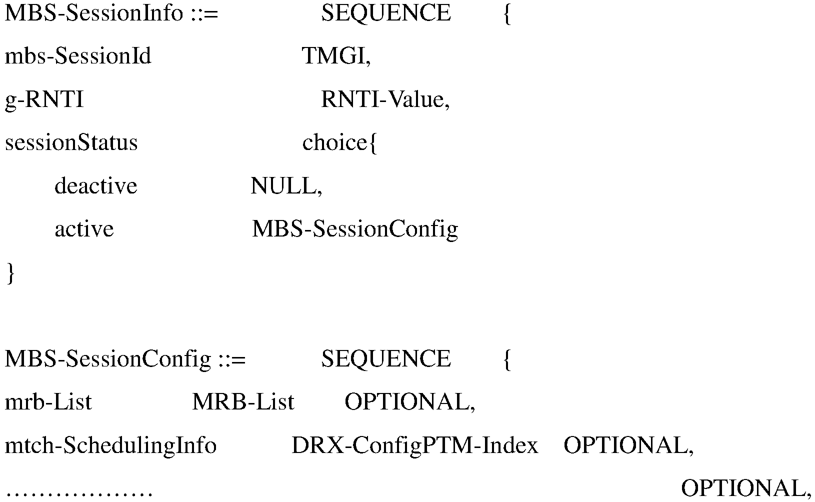

In the foregoing two examples, mbs-SessionId TMGI is an example of a configuration of the multicast/broadcast session identifier, and g-RNTI RNTI-Value is an example of a configuration of the group radio network temporary identifier. When the service status is inactive, the configuration information includes the TMGI and the g-RNTI. When the service status is active, the configuration information may include the TMGI, the g-RNTI, the MRB, the DRX, and the like. Optionally, the foregoing configurations are merely used as an example rather than a limitation. When the service status is inactive, some other configuration information may also be included, for example, some other configurations that are not mentioned may be included.

Alternatively, when the configuration information includes MRB configuration information, it may indicate that the service status is active; and when the configuration information does not include the MRB configuration information, it may indicate that the service status is inactive. Specifically, for a method for indicating the service status by the network apparatus and a method for determining the service status by the terminal apparatus, refer to related descriptions in the foregoing example 1 or example 2. Details are not described again.

In this implementation, absence of some configuration information indicates that a status of a corresponding multicast/broadcast service is inactive, and the UE may determine, by reading configuration information, that the status of the service is inactive or active. In this way, a status of a related service can be obtained in a timely manner, thereby avoiding entering a connected state to initiate a join procedure, and reducing power consumption of the UE.

The foregoing describes the method for determining the status of the multicast/broadcast service by the terminal apparatus (also referred to as a first terminal apparatus) in a local cell. The following describes in detail a method for determining the status of the multicast/broadcast service by a terminal apparatus (referred to as a second terminal apparatus below) moving from another cell to the current cell.

The cell may be a cell obtained through division based on a coverage area of the network apparatus, may be a cell obtained through division based on a geographical location of the terminal apparatus, or may be a cell obtained through division based on another condition. This is not limited in embodiments of this application.

In the manner 1, the method for determining the service status by the second terminal apparatus includes: The second terminal apparatus receives the first indication information from the network apparatus, and determines the status of the multicast/broadcast service by parsing the first indication information. For detailed descriptions of the first indication information, refer to the manner 1. Details are not described again. It may be understood that a correspondence between information sent by the network apparatus and a service status, for example, a correspondence between a bit value and a service status when the first indication information is a bit, or Correspondence between a service status and cases in which the multicast/broadcast session identifier includes the first indication information and the multicast/broadcast session identifier does not include the first indication information may be predefined, for example, prestored in the second terminal apparatus in a form of a table. Alternatively, a correspondence between information sent by the network apparatus and a service status may be sent by the network apparatus to the second terminal apparatus. For example, the network apparatus may send the correspondence to the second terminal apparatus before the second terminal apparatus enters the cell or when or after the second terminal apparatus enters the cell. An occasion at which the network apparatus sends the correspondence to the terminal apparatus is not limited in embodiments of this application.

In the manner 2, a determining method of the second terminal apparatus includes: Descriptions are provided by using an example in which absence of a multicast/broadcast session identifier corresponding to a service indicates that a status of the service is inactive.

In a possible implementation, the network apparatus includes indication information in a system message or a multicast broadcast control channel, where the indication information indicates whether the network apparatus provides a multicast service in an idle state or an inactive state. The indication information may be cell-level indication information. When the network apparatus indicates not providing multicast in the idle state or the inactive state, the second terminal apparatus determines that the second terminal apparatus needs to enter a connected state to receive a service. When the network apparatus indicates that the cell can provide a multicast service in the idle state or the inactive state, if the second terminal apparatus does not read a multicast/broadcast session identifier, for example, a TMGI, in the multicast broadcast control channel, the second terminal apparatus determines that a status of a service corresponding to the absent TMGI is inactive.

In another possible implementation, the second terminal apparatus determines whether configuration information of another service is read from a multicast broadcast control channel, where for example, the configuration information may be a TMGI of another multicast service, or whether a multicast broadcast control channel message (or a multicast broadcast control channel message for a multicast service in an idle state or an inactive state) is read within a period of time, where duration of the period of time may be preset, or may be indicated by the network apparatus to the second terminal apparatus. The second terminal apparatus determines whether a TMGI is read, and then determines a status of a related service.

Specifically, an example in which the second terminal apparatus determines whether configuration information of another service is read from the multicast broadcast control channel is used for description. When the second terminal apparatus reads the configuration information of the another service from the multicast broadcast control channel, and does not read a TMGI #A from the multicast broadcast control channel, the second terminal apparatus may determine that a status of a service #A identified by the TMGI #A is inactive. When the second terminal apparatus does not read the configuration information of the another service from the multicast broadcast control channel, and does not read any TMGI from the multicast broadcast control channel, the second terminal apparatus determines that the second terminal apparatus needs to enter a connected state to receive a service.

It should be understood that, in the foregoing two possible implementations, the method for determining the service status by the second terminal apparatus is described based on that absence of a multicast/broadcast session identifier corresponding to a service indicates that a status of the service is inactive. The method is also applicable when absence of the multicast/broadcast session identifier corresponding to the service indicates that the status of the service is active. Details are described below.

In a possible implementation, the network apparatus includes indication information in a system message or a multicast broadcast control channel, where the indication information indicates whether the network apparatus provides a multicast service in an idle state or an inactive state. The indication information may be cell-level indication information. When the network apparatus indicates not providing multicast in the idle state or the inactive state, the second terminal apparatus determines that the second terminal apparatus needs to enter a connected state to receive a service. When the network apparatus indicates that the cell can provide a multicast service in the idle state or the inactive state, if the second terminal apparatus does not read a multicast/broadcast session identifier, for example, a TMGI, in the multicast broadcast control channel, the second terminal apparatus determines that a status of a service corresponding to the absent TMGI is active.

In another possible implementation, the second terminal apparatus determines whether configuration information of another service is read from a multicast broadcast control channel, where for example, the configuration information may be a TMGI of another multicast service, or whether a multicast broadcast control channel message (or a multicast broadcast control channel message for a multicast service in an idle state or an inactive state) is read within a period of time, where duration of the period of time may be preset, or may be indicated by the network apparatus to the second terminal apparatus. The second terminal apparatus determines whether a TMGI is read, and then determines a status of a related service.

Specifically, an example in which the second terminal apparatus determines whether configuration information of another service is read from the multicast broadcast control channel is used for description. When the second terminal apparatus reads the configuration information of the another service from the multicast broadcast control channel, and does not read a TMGI #A from the multicast broadcast control channel, the second terminal apparatus may determine that a status of a service #A identified by the TMGI #A is active. When the second terminal apparatus does not read the configuration information of the another service from the multicast broadcast control channel, and does not read any TMGI from the multicast broadcast control channel, the second terminal apparatus determines that the second terminal apparatus needs to enter a connected state to receive a service.

The foregoing method provides a method for determining a service status for a terminal apparatus moving to a current cell, which can prevent the terminal apparatus moving to the current cell from being unable to read information of the network apparatus, and improve communication efficiency of the terminal apparatus moving to the current cell.

It should be understood that a manner of obtaining the first indication information in S701 may be from the network apparatus or a core network apparatus. For example, in a case in which the first indication information is from the network apparatus, as shown in FIG. 8, before sending the indication information to indicate the service status, the network apparatus receives a deactivation request from the core network apparatus. It may be understood that the network apparatus triggers, based on the deactivation request of the core network apparatus, sending of the first indication information to the terminal device.

S702. The terminal apparatus stops, based on the first indication information, using a first radio network temporary identifier to monitor a physical downlink control channel corresponding to a multicast/broadcast service traffic channel.

The first radio network temporary identifier may be a group radio network temporary identifier.

In other words, the terminal apparatus may stop monitoring the physical downlink control channel based on the group radio network temporary identifier, or when determining, based on the first indication information, that the status of the multicast/broadcast service is inactive, the terminal apparatus may stop receiving service data corresponding to the multicast/broadcast service.

Optionally, the terminal apparatus stops receiving the service data corresponding to the multicast/broadcast service, and may further delete a resource block of the multicast/broadcast service, and/or delete a configuration of the multicast/broadcast service. For example, the terminal apparatus may perform at least one of the following operations: deleting a radio bearer, deleting a multicast service context, releasing a radio resource, or the like.

After the multicast/broadcast service is deactivated, the network apparatus and the terminal apparatus may further execute a service activation procedure. For example, the terminal apparatus may monitor a physical downlink control channel corresponding to the multicast broadcast control channel. In other words, the terminal apparatus may monitor the physical downlink control channel by using an RNTI corresponding to the multicast broadcast control channel, where the RNTI corresponding to the multicast broadcast control channel may be a multicast broadcast control channel-radio network temporary identifier (MBS control channel-radio network temporary identifier, MCCH-RNTI). The multicast broadcast control channel carries second indication information, where the second indication information indicates that the status of the multicast/broadcast service is an active state. Additionally/Alternatively, the terminal apparatus may monitor a physical downlink control channel corresponding to a paging channel. In other words, the terminal apparatus may monitor the physical downlink control channel by using an RNTI corresponding to the paging channel, where the RNTI corresponding to the paging channel may be a paging radio network temporary identifier (paging-radio network temporary identifier, P-RNTI). The paging channel carries a paging message, and the paging message indicates that the status of the multicast/broadcast service is an active state.

It should be understood that, for a meaning of "monitoring" or "stopping monitoring" in this embodiment of this application, refer to the foregoing descriptions. Other similar parts are not described again.

Specifically, there may be the following two manners:
Manner A: The terminal apparatus may continue to monitor the multicast broadcast control channel by using the MCCH-RNTI. For example, when a service activation procedure needs to be executed, the network apparatus sends a multicast broadcast control channel change notification to the terminal apparatus, where the notification may indicate a change of the multicast broadcast control channel, for example, service activation and/or service start. The terminal apparatus may execute the service activation procedure based on the notification. The multicast broadcast control channel change notification is carried on a physical downlink control channel (physical downlink control channel, PDCCH), and the PDCCH corresponds to a logical channel multicast broadcast control channel. Specifically, for an indication manner of the multicast broadcast control channel change notification, refer to related descriptions in S701. Details are not described herein again.
Manner B: The terminal apparatus may continue to monitor the multicast broadcast control channel by using the MCCH-RNTI. When a service is activated, an MCCH change notification indicates that the multicast broadcast control channel changes. The terminal apparatus further continuously monitors a paging message by using the P-RNTI, where the paging message may be a unicast paging message and/or a group paging (group paging) message corresponding to a TMGI. It may be understood that the terminal apparatus may receive service activation indication information based on the multicast broadcast control channel and/or the paging message.
Manner C: The terminal apparatus stops using the MCCH-RNTI to monitor the PDCCH (the logical channel corresponds to the multicast broadcast control channel), and continuously monitors a paging message by using the P-RNTI, where the paging message includes a unicast paging message and a group paging message corresponding to a TMGI. In this manner, the terminal apparatus no longer monitors the multicast broadcast control channel and the multicast/broadcast service traffic channel, but monitors paging, thereby saving energy.

It should be understood that the terminal apparatus is used as an example for description in the foregoing manner, but this is not limited thereto. For example, the second terminal apparatus may also be applicable. This is not limited in embodiments of this application.

In the foregoing embodiment, the network apparatus indicates a service status to the terminal apparatus, and the terminal apparatus obtains the service status in a timely manner, and at least does not monitor the multicast/broadcast service traffic channel, thereby reducing power consumption of the terminal apparatus.

Optionally, the network apparatus may further indicate the status of the multicast/broadcast service to the terminal apparatus when an RRC connection is released. For a specific indication manner, refer to the implementation 1 or the implementation 2 in the manner 1 in S701. Details are not described herein again. Specifically, the information indicating the status of the multicast/broadcast service may be carried in an inactive (inactive) configuration.

Corresponding to the foregoing manner A or B, after the RRC connection is released, if the multicast broadcast control channel change notification indicates that there is no change, the terminal apparatus does not need to read the multicast broadcast control channel.

Corresponding to the foregoing manner C, after the RRC connection is released, until paging is received, the terminal apparatus does not need to read the multicast broadcast control channel.

The foregoing manners further reduce additional overheads of monitoring the multicast broadcast control channel by the terminal apparatus.

The foregoing describes an execution procedure of the terminal apparatus by using a case in which the service status is inactive as an example. When the network apparatus indicates that the service status is active, the terminal apparatus may perform the following steps.

Step (1): The terminal apparatus determines first indication information, where the first indication information indicates a status of a multicast/broadcast service, and the status of the multicast/broadcast service includes an active state. For a specific indication manner of the first indication information, refer to S701.

Step (2): The terminal apparatus stops, based on the first indication information, using a first radio network temporary identifier to monitor a physical downlink control channel corresponding to a multicast/broadcast service traffic channel.

In other words, in S701, when the network apparatus indicates that a status of a current service is active, the terminal apparatus needs to receive data corresponding to the service.

It should be understood that the terminal apparatus may be the foregoing first terminal apparatus, or may be the foregoing second terminal apparatus. This is not limited in embodiments of this application.

Optionally, the method shown in FIG. 7 may further include the following content:

The first terminal apparatus and/or the second terminal apparatus may further receive a multicast broadcast control channel change notification (MCCH change notification), where the multicast broadcast control channel change notification may be for notifying multicast/broadcast service information.

The multicast/broadcast service information may include multicast/broadcast service status information, where the multicast/broadcast service status information may be a current status of the multicast/broadcast service, or may be status change information of the multicast/broadcast service. The multicast/broadcast service information may further include information such as multicast/broadcast service start, multicast/broadcast service end, or multicast/broadcast service configuration information update. The multicast broadcast control channel change notification may be carried in downlink control information (downlink control information, DCI).

For multicast, the multicast broadcast control channel change notification may include a first bit and a second bit, where the multicast/broadcast service status information may be indicated by using the first bit or the second bit, and the multicast/broadcast service status change information may be indicated by using the first bit or the second bit. For example, the first bit indicates the multicast/broadcast service status information or the multicast/broadcast service status change information. The first bit may indicate a service status, or may indicate a procedure executed by the terminal apparatus, for example, indicate service activation, indicate service deactivation, or indicate service status change.

For example, the first bit may indicate a status of a current service. For example, if a value of the first bit is 0, it indicates that current statuses of all services are inactive; and if the value of the first bit is 1, it indicates other information, for example, it indicates that there is an active service. Alternatively, if a value of the first bit is 0, it indicates that current statuses of all services are active; and if the value of the first bit is 1, it indicates other information, for example, it indicates that there is an inactive service. It should be understood that the foregoing correspondence between a bit value and indication content is merely an example rather than a limitation.

The first bit may alternatively indicate a procedure executed by the terminal apparatus. For example, if a value of the first bit is 1, it indicates that a deactivation procedure is being performed for all services; and if the value of the first bit is 0, it indicates other information, for example, there is a service for which an activation procedure is being performed. Alternatively, if a value of the first bit is 1, it indicates that an activation procedure is being performed for all services; and if the value of the first bit is 0, it indicates other information, for example, there is a service for which a deactivation procedure is being performed. Alternatively, if a value of the first bit is 1, it indicates that service statuses of all services are being changed; and if the value of the first bit is 0, it indicates other information, for example, there is a service whose service status is not being changed. Alternatively, if a value of the first bit is 1, it indicates that a deactivation procedure is being performed for a service. Alternatively, if a value of the first bit is 1, it indicates that an activation procedure is being performed for a service. It should be understood that the foregoing correspondence between a bit value and indication content is merely an example rather than a limitation.

The second bit may indicate a configuration change corresponding to a service. For example, the terminal apparatus reads the first bit, where a value of the first bit is 0, indicating that statuses of all services are inactive; and the terminal apparatus reads the second bit, where the second bit indicates that a service configuration is changed, the terminal apparatus may not read the multicast broadcast control channel. That is, when statuses of all services received by the terminal apparatus are inactive, even if a service configuration is changed, the multicast broadcast control channel does not need to be read, thereby further reducing power consumption of the terminal apparatus.

It should be understood that the second bit may indicate configuration changes of all services, or may indicate configuration changes of some services. This is not limited in embodiments of this application.

Optionally, the terminal apparatus may not need to read the second bit. For example, when the first bit indicates that current statuses of all services are inactive, the terminal apparatus does not need to read the second bit, thereby further reducing power consumption of the terminal apparatus.

Optionally, the network apparatus may alternatively indicate the multicast/broadcast service information by using one bit. This is not limited in embodiments of this application.

It should be understood that the foregoing correspondence between a bit value and indication content is merely an example rather than a limitation. The foregoing correspondence between the bit value and indication content may be preconfigured, or may be sent by the network apparatus to the terminal apparatus. This is not limited in embodiments of this application.

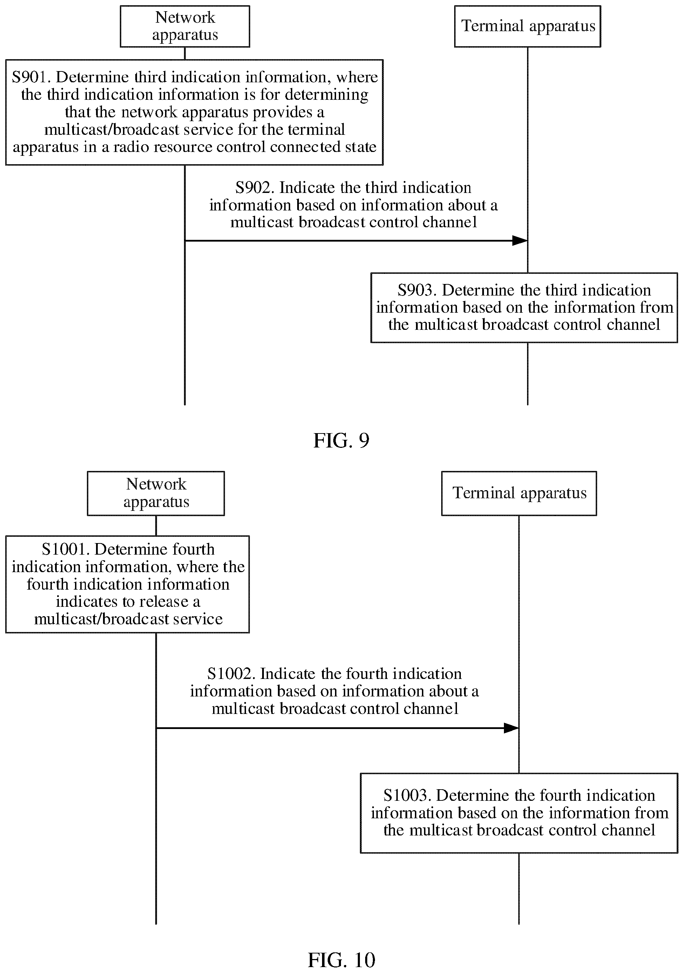

An embodiment of this application further provides a communication method. In the method, a terminal apparatus can enter an RRC connected state by monitoring a multicast broadcast control channel, to receive a multicast/broadcast service. As shown in FIG. 9, the method includes the following steps.

S901. A network apparatus determines third indication information, where the third indication information is for determining that the network apparatus provides a multicast/broadcast service for a terminal apparatus in a radio resource control connected state.

In other words, the third indication information is for determining that the network apparatus can provide the multicast/broadcast service for the terminal apparatus in the radio resource control connected state, the third indication information is for determining that the network apparatus supports providing the multicast/broadcast service for the terminal apparatus in the radio resource control connected state, or the third indication information is for determining that the network apparatus has a capability of providing the multicast/broadcast service for the terminal apparatus in the radio resource control connected state.

Optionally, the third indication information indicates at least one of the following:
the network apparatus providing the multicast/broadcast service for the terminal apparatus only in the radio resource control connected state;
the terminal apparatus entering the radio resource control connected state, in other words, the terminal apparatus triggering an RRC connection setup procedure;
the network apparatus not providing the multicast/broadcast service for the terminal apparatus in a radio resource control idle state or inactive state;
waking up the terminal apparatus; or
paging the terminal apparatus.

S902. The network apparatus indicates the third indication information based on information about a multicast broadcast control channel.

Optionally, that the network apparatus indicates the third indication information based on information about a multicast broadcast control channel may include the following several possible implementations:
In a first possible implementation, the network apparatus sends the third indication information through the multicast broadcast control channel. Correspondingly, the terminal apparatus receives the third indication information.

Optionally, when the third indication information indicates to wake up and/or page the terminal apparatus, the network apparatus further needs to indicate an identifier of the terminal apparatus. Further, the third indication information may include the identifier of the terminal apparatus.

For example, if the network apparatus needs to wake up a plurality of terminal apparatuses based on the third indication information, the network apparatus may include identifiers of the plurality of terminal apparatuses in the third indication information,

In a second possible implementation, the network apparatus indicates the third indication information based on configuration information, where the configuration information may be carried on the multicast broadcast control channel. In other words, the information about the multicast broadcast control channel is the configuration information. For example, the configuration information includes a second parameter, and the second parameter includes a temporary multicast group identifier and/or a group radio network temporary identifier. For example, when the configuration information includes only a multicast/broadcast session identifier, when the configuration information includes only the multicast/broadcast session identifier and the group radio network temporary identifier, when the configuration information does not include an MRB configuration, or when the configuration information does not include the group radio network temporary identifier, the third indication information may be indicated. Specifically, for the configuration information and the indication manner, refer to related descriptions of the implementation 3 in the manner 1 in step S701. Details are not described again. In other words, the configuration information may indicate whether the network apparatus supports providing the multicast/broadcast service in the radio resource control connected state.

In a third possible implementation, the network apparatus may indicate the third indication information based on a multicast/broadcast session identifier, where the broadcast/multicast session identifier may be carried on the multicast broadcast control channel. In other words, the information about the multicast broadcast control channel is the multicast/broadcast session identifier. For example, the network apparatus sends a third multicast session identifier set and a fourth multicast session identifier set to the terminal apparatus through the multicast broadcast control channel, where the third multicast session identifier set is an identifier set sent by the network apparatus before the network apparatus sends the fourth multicast session identifier set, the third multicast session identifier set includes a multicast session identifier corresponding to a multicast/broadcast service #A, and the fourth multicast session identifier set does not include the multicast session identifier corresponding to the multicast/broadcast service #A. In this case, the third indication information may be indicated. In other words, it indicates that the network apparatus can provide the multicast/broadcast service #A for the terminal apparatus in the radio resource control connected state. Specifically, refer to related descriptions of the first possible implementation in the manner 2 in step S701. Herein, only indication content is different, and details are not described again.

S903. The terminal apparatus determines the third indication information based on the information from the multicast broadcast control channel.

Optionally, after determining the third indication information, the terminal apparatus may enter a connected state.

In the method, the terminal apparatus may determine, based on the multicast broadcast control channel, that the network apparatus can provide the multicast/broadcast service for the terminal apparatus in the radio resource control connected state without monitoring paging, thereby reducing power consumption of the terminal apparatus.

An embodiment of this application further provides a communication method. A network apparatus notifies a terminal apparatus of a service status in a timely manner, to reduce signaling overheads required for the terminal apparatus in an idle state or an inactive state to enter a connected state when the terminal apparatus needs to receive a multicast/broadcast service, thereby reducing power consumption of the terminal apparatus. As shown in FIG. 10, the method includes the following steps.

S1001. The network apparatus determines fourth indication information, where the fourth indication information indicates to release a multicast/broadcast service.

S1002. The network apparatus indicates the fourth indication information based on information about a multicast broadcast control channel.

The network apparatus indicates the fourth indication information in the following two manners:
Manner D: The network apparatus sends the fourth indication information to the terminal apparatus. Correspondingly, the terminal apparatus receives the fourth indication information from the network apparatus. The fourth indication information indicates that a status of the multicast/broadcast service is released.

In a possible implementation, the fourth indication information may be carried in a multicast/broadcast session identifier. In other words, the terminal apparatus receives the multicast/broadcast session identifier, and parses the multicast/broadcast session identifier to obtain that the status of the multicast/broadcast service is released. The fourth indication information may be a field in the multicast/broadcast session identifier. For example, the fourth indication information may be 1 bit. A value of the bit may indicate the status of the multicast/broadcast service. For example, if the value of the bit is 1, it indicates that the status of the multicast/broadcast service is released; or if the value of the bit is 0, it indicates that the status of the multicast/broadcast service is released. This is not limited in embodiments of this application. The foregoing correspondence between a bit value and releasing may be predefined, or may be sent by the network apparatus to the terminal apparatus. The network apparatus may send the correspondence to the terminal apparatus in a broadcast, multicast, or unicast manner. This is not limited in embodiments of this application. It should be further understood that the foregoing quantity of bits is described by using only 1 bit as an example. This is not limited in embodiments of this application. For example, the status may be indicated by using 2 bits, 3 bits, or the like.

Further, the network apparatus may send at least one multicast/broadcast session identifier to the terminal apparatus. Correspondingly, the terminal apparatus receives the at least one multicast/broadcast session identifier, where the at least one multicast/broadcast session identifier is in one-to-one correspondence with at least one service, and the at least one service includes a first multicast/broadcast service. It may be understood that the at least one multicast/broadcast session identifier may include a plurality of pieces of indication information, and the plurality of pieces of indication information include the fourth indication information. For example, some multicast/broadcast session identifiers may include status indication information of a corresponding service, or all multicast/broadcast session identifiers may include status indication information of a corresponding service. The multicast/broadcast session identifier may be a TMGI. Specifically, refer to related descriptions of the manner 1 in step 701. Details are not described herein again.

Manner E: In a possible implementation, the network apparatus sends at least one multicast/broadcast session identifier to the terminal apparatus. Correspondingly, the terminal apparatus receives the at least one multicast/broadcast session identifier, where the at least one multicast/broadcast session identifier is in one-to-one correspondence with a service, other than a first multicast/broadcast service, in at least one service. In other words, the network apparatus sends M multicast/broadcast session identifiers to the terminal apparatus. Correspondingly, the terminal apparatus receives the M multicast/broadcast session identifiers, where the M multicast/broadcast session identifiers are in one-to-one correspondence with services, other than the first multicast/broadcast service, in P services, where M=P-1, and both P and M are positive integers. If the terminal apparatus does not obtain a multicast/broadcast session identifier corresponding to the first multicast/broadcast service through parsing, the terminal apparatus may determine to release the first multicast/broadcast service. In other words, absence of a multicast/broadcast session identifier corresponding to a service indicates that the service is released. The multicast/broadcast session identifier may be a TMGI. Specifically, refer to related descriptions of the manner 2 in step 701. Details are not described herein again.

It should be understood that, the foregoing descriptions are provided by using an example in which the fourth indication information is carried on the multicast broadcast control channel. The fourth indication information may alternatively be carried on a system information block (system information block, SIB).

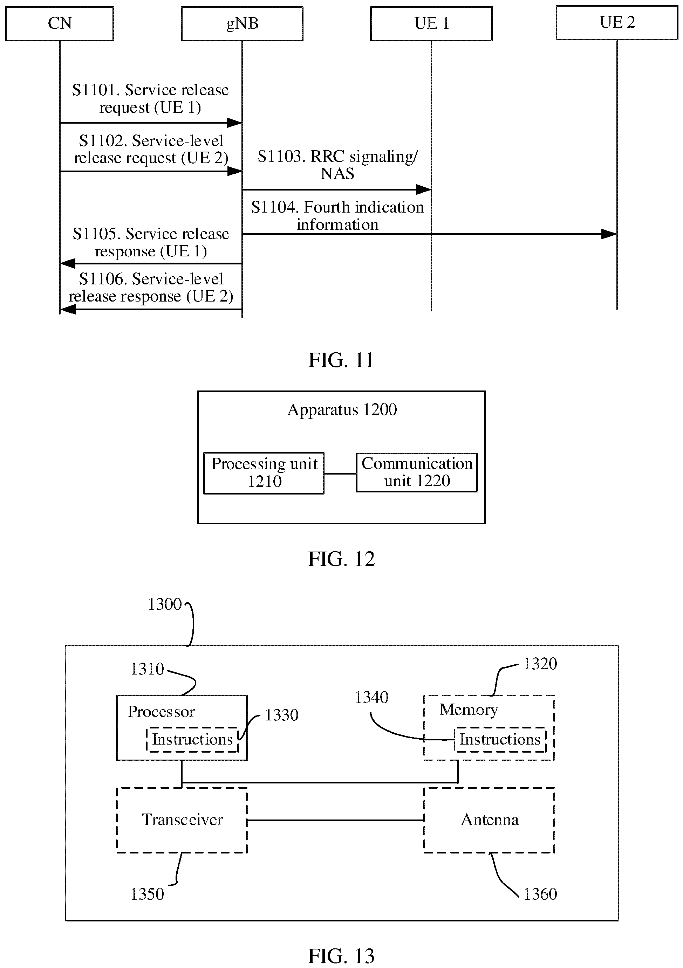

It should be understood that the fourth indication information may be sent by the network apparatus, for example, a gNB, to the terminal apparatus. The fourth indication information may be triggered based on a service release request message. As shown in FIG. 11, before sending the fourth indication information, the gNB further receives a service release request from a core network. There may be two types of service release requests. One is for a terminal apparatus that receives a multicast service in an RRC connected state, for example, S1101 in FIG. 11. The CN sends the service release request (UE 1) to the gNB. In this case, the gNB may indicate, by using RRC signaling or NAS signaling, to release an RRC connection to the UE 1 (S1103).

The other type is for a terminal apparatus that receives a multicast service in an RRC idle state or inactive state, for example, S1102 in FIG. 11. The CN sends a service-level release request (UE 2) to the gNB. In this case, the gNB indicates the fourth indication information (S1104) to the UE 2, to indicate the UE 2 to release the multicast service. The gNB further needs to report, to a core network apparatus, a list of identifiers of UEs that receive the multicast service in the idle state or inactive state, and the core network apparatus may delete these UEs from an MBS context (context). Specifically, the list of the identifiers of these UEs may be carried in a service-level release response (S1106). The identifiers of the UEs may be RAN NGAP UE IDs or 5G-S-TMSIs.

Optionally, a RAN may send the identifiers of the UEs to an AMF, the AMF generates a subscription permanent identifier (subscription permanent identifier, SUPI) list based on the UE list sent by the RAN, and the AMF sends the SUPI list to an SMF.

The gNB may send the fourth indication information to all cells in a RAN-based notification area (RAN-based notification area, RNA). In this way, all UEs moving between different cells can receive the fourth indication information.

S1003. The terminal apparatus determines the fourth indication information based on the information from the multicast broadcast control channel.

For example, the terminal apparatus may receive the fourth indication information from the network apparatus, or may determine the fourth indication information based on a multicast session identifier. Details are not described herein again.

Optionally, after receiving the release request, the terminal apparatus in the idle state or the inactive state deletes a resource block of the multicast/broadcast service, and/or deletes a configuration of the multicast/broadcast service. The terminal apparatus is in a radio resource control idle state or inactive state. Optionally, a behavior of a terminal apparatus during release may be different from that of a terminal apparatus during deactivation. For example, during release, the UE may release a bearer and a radio resource, and delete a multicast service context, a multicast service configuration, and information about a multicast service that the UE joins. During deactivation, the UE may release only a bearer and a radio resource, or the UE may retain information about a multicast service that the UE joins.

In this embodiment, the network apparatus may set a multicast service release indication through the multicast broadcast control channel when the UE is in the idle state or the inactive state, to prevent the terminal apparatus in the idle state or the inactive state from entering a connected state again to execute a multicast release procedure, thereby reducing power consumption of the terminal apparatus in the idle state or the inactive state.

It should be understood that sequence numbers of the foregoing processes do not mean an execution sequence. The execution sequence of the processes should be determined based on functions and internal logic of the processes, and should not be construed as any limitation on implementation processes of embodiments of this application. Each step may alternatively be performed independently.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For example, when the network apparatus not only indicates to the terminal apparatus that the service status is inactive but also indicates the terminal apparatus to release the multicast/broadcast service, the following manners may be available:
Manner (1): The network apparatus indicates, to the terminal apparatus in the manner 1 in S701, that the service status is inactive, and the network apparatus indicates, to the terminal apparatus in the manner D in S1002, that the service status is released.
Manner (2): The network apparatus indicates, to the terminal apparatus in the manner 2 in S701, that the service status is inactive, and the network apparatus indicates, to the terminal apparatus in the manner D in S1002, that the service status is released.
Manner (3): The network apparatus indicates, to the terminal apparatus in the manner 1 in S701, that the service status is inactive, and the network apparatus indicates, to the terminal apparatus in the manner E in S1002, that the service status is released.

FIG. 12 and FIG. 13 are schematics of structures of possible communication apparatuses according to embodiments of this application. The communication apparatuses may be configured to implement functions of the terminal apparatus or the network apparatus in the foregoing method embodiments. Therefore, beneficial effects of the foregoing method embodiments can also be implemented. In embodiments of this application, the communication apparatus may be one of the terminals 120a to 120j shown in FIG. 1, may be the base station 110a or 110b shown in FIG. 1, or may be a module (for example, a chip) used in the terminal apparatus or the network apparatus.

In the foregoing embodiments provided in this application, the methods provided in embodiments of this application are described from a perspective of interaction between devices. To implement functions in the methods provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

The following describes, in detail with reference to FIG. 12 and FIG. 13, communication apparatuses provided in embodiments of this application. It should be understood that descriptions of apparatus embodiments correspond to the descriptions of the method embodiment. Therefore, for content that is not described in detail, refer to the method embodiment. For brevity, details are not described herein again.

Same as the foregoing concept, as shown in FIG. 12, an embodiment of this application further provides an apparatus 1200, configured to implement functions of the terminal apparatus or the network apparatus in the foregoing methods. For example, the apparatus may be a software module or a chip system. In this embodiment of this application, the chip system may include a chip, or may include a chip and another discrete component. The apparatus 1200 may include a processing unit 1210 and a communication unit 1220.

In this embodiment of this application, the communication unit may also be referred to as a transceiver unit, and may include a sending unit and/or a receiving unit, which are respectively configured to perform steps of sending and receiving by the terminal apparatus or the network apparatus in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1220 and that is configured to implement the receiving function may be considered as a receiving unit, and a component that is in the communication unit 1220 and that is configured to implement the sending function may be considered as a sending unit. That is, the communication unit 1220 includes the receiving unit and the sending unit. The communication unit sometimes may also be referred to as a transceiver machine, a transceiver, an interface circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

When the communication apparatus 1200 performs functions of the terminal apparatus in a procedure shown in any one of FIG. 7 to FIG. 11 in the foregoing embodiments:
The communication unit may be configured to receive information from a network apparatus, for example, information about a multicast broadcast control channel.

The processing unit may be configured to determine a status of a multicast/broadcast service.

When the communication apparatus 1200 performs functions of the network apparatus in a procedure shown in any one of FIG. 7 to FIG. 11 in the foregoing embodiments:

The communication unit may be configured to send information, for example, information about a multicast broadcast control channel, to a terminal apparatus.

The processing unit may be configured to determine information about the multicast broadcast control channel.

The foregoing descriptions are merely an example. The processing unit 1210 and the communication unit 1220 may further perform other functions. For more detailed descriptions, refer to related descriptions in the method embodiments shown in FIG. 7 to FIG. 11 or other method embodiments. Details are not described herein again.

FIG. 13 shows an apparatus 1300 according to an embodiment of this application. The apparatus shown in FIG. 13 may be an implementation of a hardware circuit of the apparatus shown in FIG. 12. The communication apparatus is applicable to the foregoing flowcharts, and performs functions of the terminal device or the network device in the foregoing method embodiments. For ease of description, FIG. 13 merely shows main components of the communication apparatus.

The communication apparatus 1300 may be a terminal device, and can implement functions of the first terminal apparatus or the second terminal apparatus in the methods provided in embodiments of this application. Alternatively, the communication apparatus 1300 may be an apparatus that can support the first terminal apparatus or the second terminal apparatus in implementing corresponding functions in the methods provided in embodiments of this application. The communication apparatus 1300 may be a chip system. In this embodiment of this application, the chip system may include a chip, or may include a chip and another discrete component. For specific functions, refer to descriptions of the foregoing method embodiments.

The communication apparatus 1300 includes one or more processors 1310, configured to implement or support the communication apparatus 1300 in implementing functions of the first terminal apparatus or the second terminal apparatus in the methods provided in embodiments of this application. For details, refer to detailed descriptions in the method examples. Details are not described herein again. The processor 1310 may also be referred to as a processing unit or a processing module, and may implement a specific control function. The processor 1310 may be a general-purpose processor or a dedicated processor. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1300, execute a software program, and/or process data. Different processors may be independent devices, or may be integrated into one or more processors, for example, integrated into one or more application-specific integrated circuits. It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any regular processor or the like.

Optionally, the communication apparatus 1300 includes one or more memories 1320, configured to store instructions 1340. The instructions may be run on the processor 1310, to enable the communication apparatus 1300 to perform the methods described in the foregoing method embodiments. The memory 1320 is coupled to the processor 1310. The coupling in embodiments of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320. At least one of the at least one memory may be included in the processor. It should be noted that the memory 1320 is not necessary, and therefore is shown by using dashed lines in FIG. 13.

Optionally, the memory 1320 may further store data. The processor and the memory may be separately disposed, or may be integrated together. In embodiments of this application, the memory 1320 may be a nonvolatile memory, for example, a hard disk drive (hard disk drive, HDD) or a solid-state drive (solid-state drive, SSD), or may be a volatile memory (volatile memory), for example, a random access memory (random access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, and is not limited thereto. The memory in embodiments of this application may alternatively be a circuit or any other apparatus that can implement a storage function, and is configured to store the program instructions and/or the data.

Optionally, the communication apparatus 1300 may include instructions 1330 (which may also be referred to as code or programs sometimes). The instructions 1330 may be run on the processor, to enable the communication apparatus 1300 to perform the methods described in the foregoing embodiments. The processor 1310 may store data.

Optionally, the communication apparatus 1300 may further include a transceiver 1350 and an antenna 1360. The transceiver 1350 may be referred to as a transceiver unit, a transceiver module, a transceiver machine, a transceiver circuit, a transceiver, an input/output interface, or the like, and is configured to implement a transceiver function of the communication apparatus 1300 through the antenna 1360.

The processor 1310 and the transceiver 1350 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1300 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1300 may include more or fewer components, some components are integrated, or some components are split. These components may be implemented by hardware, software, or a combination of software and hardware.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a terminal apparatus, first indication information, wherein the first indication information indicates a status of a multicast/broadcast service, and the status of the multicast/broadcast service comprises an inactive state; and
stopping, by the terminal apparatus based on the first indication information, using a first radio network temporary identifier to monitor a physical downlink control channel corresponding to a multicast/broadcast service traffic channel.

2. The method according to claim 1, wherein the terminal apparatus is in a radio resource control inactive state or idle state.

3. The method according to claim 1 or 2, wherein the first indication information is carried on a multicast broadcast control channel.

4. The method according to any one of claims 1 to 3, wherein that the terminal apparatus determines that the first indication information indicates that the status of the multicast/broadcast service is the inactive state comprises:
receiving, by the terminal apparatus, the first indication information from a network apparatus, wherein the first indication information indicates that the status of the multicast/broadcast service is the inactive state.

5. The method according to any one of claims 1 to 3, wherein that the terminal apparatus determines that the first indication information indicates that the status of the multicast/broadcast service is the inactive state comprises:
determining, by the terminal apparatus based on that a multicast session identifier corresponding to the multicast/broadcast service is in a first multicast session identifier set and is not in a second multicast session identifier set, that the status of the multicast/broadcast service is the inactive state, wherein the first multicast session identifier set is an identifier set received by the terminal apparatus before the terminal apparatus receives the second multicast session identifier set.

6. The method according to any one of claims 1 to 3, wherein the method further comprises:
receiving, by the terminal apparatus, configuration information, wherein the configuration information comprises a first parameter, and the first parameter is at least one of the following: a temporary multicast group identifier or a group radio network temporary identifier; and
that the terminal apparatus determines that the first indication information indicates that the status of the multicast/broadcast service is the inactive state comprises:
determining, by the terminal apparatus based on the first parameter, that the status of the multicast/broadcast service is the inactive state.

7. The method according to any one of claims 1 to 6, wherein the method further comprises:
receiving, by the terminal apparatus, multicast broadcast control channel change notification information, wherein the multicast broadcast control channel change notification information indicates a multicast/broadcast service status, or the multicast broadcast control channel change notification information indicates that a multicast/broadcast service status changes, and the multicast/broadcast service status comprises an active state or an inactive state.

8. The method according to any one of claims 1 to 7, wherein the method further comprises:
monitoring, by the terminal apparatus, a physical downlink control channel corresponding to the multicast broadcast control channel, wherein the multicast broadcast control channel carries second indication information, and the second indication information indicates that the status of the multicast/broadcast service is an active state; and/or
monitoring, by the terminal apparatus, a physical downlink control channel corresponding to a paging channel, wherein the paging channel carries a paging message, and the paging message indicates that the status of the multicast/broadcast service is an active state.

9. A communication method, comprising:
determining, by the terminal apparatus, third indication information based on information from a multicast broadcast control channel; and
determining, by the terminal apparatus based on the third indication information, that a network apparatus provides a multicast/broadcast service for the terminal apparatus in a radio resource control connected state.

10. The method according to claim 9, wherein the third indication information indicates at least one of the following:
the network apparatus providing the multicast/broadcast service for the terminal apparatus only in the radio resource control connected state;
the terminal apparatus entering the radio resource control connected state;
the network apparatus not providing the multicast/broadcast service for the terminal apparatus in a radio resource control inactive state or idle state;
waking up the terminal apparatus; or
paging the terminal apparatus.

11. The method according to claim 10, wherein the method further comprises:
receiving, by the terminal apparatus, configuration information through the multicast broadcast control channel, wherein the configuration information comprises a second parameter, and the second parameter is at least one of the following: a temporary multicast group identifier or a group radio network temporary identifier; and
the determining, by the terminal apparatus, third indication information based on information from a multicast broadcast control channel comprises:
determining, by the terminal apparatus, the third indication information based on the second parameter.

12. The method according to claim 10, wherein the method further comprises:
receiving, by the terminal apparatus, a third multicast session identifier set and a fourth multicast session identifier set through the multicast broadcast control channel, wherein the third multicast session identifier set is an identifier set received by the terminal apparatus before the terminal apparatus receives the fourth multicast session identifier set; and
the determining, by the terminal apparatus, third indication information based on information from a multicast broadcast control channel comprises:
determining, by the terminal apparatus, the third indication information based on that a multicast session identifier corresponding to the multicast/broadcast service is in the third multicast session identifier set and is not in the fourth multicast session identifier set.

13. A communication method, comprising:
determining, by a network apparatus, third indication information, wherein the third indication information is for determining that the network apparatus provides a multicast/broadcast service for a terminal apparatus in a radio resource control connected state; and
indicating, by the network apparatus, the third indication information based on information about a multicast broadcast control channel.

14. The method according to claim 13, wherein the third indication information indicates at least one of the following:
the network apparatus providing the multicast/broadcast service for the terminal apparatus only in the radio resource control connected state;
the terminal apparatus entering the radio resource control connected state;
the network apparatus not providing the multicast/broadcast service for the terminal apparatus in a radio resource control inactive state or idle state;
waking up the terminal apparatus; or
paging the terminal apparatus.

15. The method according to claim 13 or 14, wherein the information about the multicast broadcast control channel comprises configuration information, the configuration information comprises a second parameter, and the second parameter is at least one of the following: a temporary multicast group identifier or a group radio network temporary identifier.

16. The method according to claim 14, wherein the indicating, by the network apparatus, the third indication information based on information about a multicast broadcast control channel comprises:
sending, by the network apparatus, a third multicast session identifier set and a fourth multicast session identifier set through the multicast broadcast control channel, wherein the third multicast session identifier set is an identifier set sent by the network apparatus before the network apparatus sends the fourth multicast session identifier set, the third multicast session identifier set comprises a multicast session identifier corresponding to the multicast/broadcast service, and the fourth multicast session identifier set does not comprise the multicast session identifier corresponding to the multicast/broadcast service.

17. A communication method, comprising:
receiving, by a terminal apparatus, fourth indication information, wherein the fourth indication information indicates to release a multicast/broadcast service; and
performing, by the terminal apparatus, at least one of the following:
releasing a radio resource or a radio bearer of the multicast/broadcast service; or
deleting a configuration of the multicast/broadcast service, wherein
the terminal apparatus is in a radio resource control inactive state or idle state.

18. The method according to claim 17, wherein the fourth indication information is carried on a multicast broadcast control channel.

19. A communication method, comprising:
determining fourth indication information; and
sending, by a network apparatus, the fourth indication information to a terminal apparatus, wherein the fourth indication information indicates to release a multicast/broadcast service, and the terminal apparatus is in a radio resource control inactive state or idle state.

20. The method according to claim 19, wherein the fourth indication information is carried on a multicast broadcast control channel.

21. The method according to claim 19 or 20, wherein the method further comprises:
sending, by the network apparatus, a session release reply message to a core network apparatus, wherein the session release reply message comprises an identifier of the multicast/broadcast service and an identifier of the terminal apparatus.

22. A communication apparatus, comprising a module configured to perform the method according to any one of claims 1 to 8, claims 9 to 12, or claim 17 or 18.

23. A communication apparatus, comprising a module configured to perform the method according to any one of claims 13 to 16.

24. A communication system, comprising the communication apparatus according to claim 22 and the communication apparatus according to claim 23.

25. A communication apparatus, comprising:
a processor, configured to execute computer instructions stored in a memory, to enable the apparatus to perform the method according to any one of claims 1 to 21.

26. The apparatus according to claim 25, wherein the apparatus further comprises the memory.

27. The apparatus according to claim 25 or 26, wherein the apparatus further comprises a communication interface, and the communication interface is coupled to the processor; and
the communication interface is configured to input and/or output information.

28. The apparatus according to any one of claims 25 to 27, wherein the apparatus is a chip.

29. A computer-readable storage medium, wherein the computer-readable storage medium stores instructions; and when the instructions are invoked and executed on a computer, the computer is enabled to perform the method according to any one of claims 1 to 21.

30. A computer program product, wherein when the computer program product runs on a computer, the computer is enabled to perform the method according to any one of claims 1 to 21.
